# EUROPÄISCHE PATENTANMELDUNG

(11) **EP 4 636 152 A1**
(43) Veröffentlichungstag der Anmeldung: **22.10.2025**
(21) Anmeldenummer: 25170330.2
(22) Anmeldetag: 14.04.2025
(51) Int. Cl.: D06F 39/02, D06F 95/00

(54) **DOSIEREINRICHTUNG**

(30) Priorität: 18.04.2024 DE 102024110910; 17.07.2024 DE 102024120224; 30.10.2024 DE 102024131759
(71) Anmelder: Herbert Saier GmbH, 79194 Gundelfingen (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Dosiereinrichtung (10) zur Dosierung und Zuführung von Medien (11a, 11b) über Fluidleitungen (12a, 12b, 12c, 34, 12e, 12f, 12g, 12l, 12m, 12n) zu wenigstens einem Zielgerät (13a, 13b, 13c), insbesondere zu einer gewerblichen textilen Waschmaschine, wobei die Dosiereinrichtung eine Schalteinrichtung (14a, 14b, 14c) aufweist, die eingangsseitig mit einer Dosierpumpe (15) und mit einer Spülpumpe (16) oder mit einer Spüleinrichtung (90) und die ausgangsseitig mit einem Zielgerät (13a, 13b, 13c) verbunden ist, und die von einer Steuerung (17) der Dosiereinrichtung (10) zur Änderung ihres Schaltzustandes ansprechbar ist, wobei die Schalteinrichtung (14a, 14b, 14c) in einem ersten Schaltzustand (18) eine kommunikative Verbindung zwischen der Dosierpumpe (15) und dem Zielgerät (13a, 13b, 13c) bereitstellt und in einem zweiten Schaltzustand (19) eine kommunikative Verbindung zwischen der Spülpumpe (16) oder der Spüleinrichtung (90) und dem Zielgerät (13a, 13b, 13c) bereitstellt.

## Beschreibung

Die Erfindung bezieht sich zunächst auf eine Dosiereinrichtung nach Anspruch 1.

Derartige Dosiereinrichtungen sind im Stand der Technik bekannt und weit verbreitet.

Lediglich beispielhaft wird auf eine Dosiereinrichtung verwiesen, die in der auf die Anmelderin zurückgehenden EP 2 783 142 A1 beschrieben ist.

Die bekannte Dosiereinrichtung dient der Dosierung und der Förderung von Medien. Sie umfasst eine Pumpe, insbesondere eine Schlauchpumpe, mit der zur Durchführung eines Dosierprozesses eine Entnahme eines vorherbestimmten Volumens an Medium aus einem Behältnis und eine Förderung dieses Mediums zu einem Zielgerät ermöglicht wird.

In bestimmten Anwendungsfällen weisen die Fluidleitungsabschnitte zwischen dem Behältnis, in dem sich das Medium befindet, und dem Zielgerät, eine große Länge auf. Diese Leitungslängen können beispielsweise 5 m oder 10 m betragen, oder noch länger ausgebildet sein.

In bestimmten Anwendungsfällen sollen Zielgeräte mit Medium versorgt werden, wobei sich die Zielgeräte an unterschiedlichen Standorten, z.B. in unterschiedlichen Räumen, oder gegebenenfalls auch in unterschiedlichen Etagen eines Gebäudes befinden.

Diese großen Leitungslängen bringen eine Reihe von Problemen mit sich: Zum einen reichen die Förderleistungen der Pumpen häufig nicht aus, um eine Förderung des Mediums entlang der langen Leitungsabschnitte der Fluidleitungen vorzunehmen. Zum anderen können die Pumpen zwar entsprechend groß dimensioniert und ausgelegt werden, um hohe Förderdrücke oder hohe Förderleistungen zu ermöglichen. Mit einer solchen Skalierung kann aber ein Verlust an Präzision für kleine, zu dosierende Medienmengen einhergehen.

Auch bereiten lange Fluidleitungswege grundsätzlich Probleme, dahingehend, dass die Förderzeiten entsprechend lang ausfallen. Dies wiederum verkompliziert die Situation, wenn von einer Dosiereinrichtung mehrere unterschiedliche Zielgeräte mit Medium beschickt werden sollen.

Hiervon ausgehend besteht die Aufgabe der Erfindung darin, eine Dosiereinrichtung bereitzustellen, die auch bei großen Leitungslängen zwischen Behältnis und Zielgerät und/ oder bei großen zu überwindenden Höhendifferenzen entlang der Fluidleitungen eine sichere, zuverlässige und schnelle Förderung von Medien ermöglicht.

Die Erfindung löst diese Aufgabe mit den Merkmalen des Anspruches 1.

Das Prinzip der Erfindung besteht gemäß einer ersten Alternative im Wesentlichen darin, die Dosiereinrichtung mit zwei unterschiedlichen Pumpen auszustatten, nämlich mit einer Dosierpumpe und mit einer Spülpumpe. Diese beiden Pumpen sind von der Steuerung der Dosiereinrichtung unmittelbar oder mittelbar ansprechbar.

Beide Pumpen können unterschiedlich ausgelegt werden. Sie können z.B. zur Erbringung unterschiedlicher Förderleistungen ausgelegt sein.

Sie dienen insbesondere unterschiedlichen Zwecken: Die Dosierpumpe kann herkömmlich, beispielsweise als Schlauchpumpe ausgebildet und konfiguriert sein und dient zur Förderung kleiner, aber exakt bemessener Medienmengen aus dem Behältnis, in dem sich das Medium befindet, entlang eines ersten, z.B. nur kurz gehaltenen oder keine größere Höhendifferenz aufweisenden Fluidleitungsabschnittes bis hinter eine Schalteinrichtung.

Die zweite Pumpe, die sogenannte Spülpumpe, dient dazu, das Medium entlang eines zweiten Fluidleitungsabschnittes, und zwar insbesondere entlang eines längeren Leitungsweges oder entlang eines eine große Höhendifferenz aufweisende Leitungsweges, bis zum Zielgerät zu fördern.

Während die erste Pumpe als Dosierpumpe ausgebildet ist und für eine präzise Mengenbemessung sorgen kann, kann die Spülpumpe optimiert an das Erfordernis, mit höheren Förderleistungen, z.B. entlang langer Fluidleitungswege zu fördern, ausgebildet sein.

Die beiden Pumpen sind eingangsseitig einer Schalteinrichtung angeordnet. Die Schalteinrichtung ist ausgangsseitig mit dem Zielgerät verbunden.

Die Schalteinrichtung kann einen Kommunikationsweg zwischen der Dosierpumpe und dem Zielgerät schalten oder alternativ einen Kommunikationsweg zwischen der Spülpumpe und dem Zielgerät schalten.

Die Schalteinrichtung kann z.B. als eine Art Drei-Wege-Ventil ausgebildet sein. Die Schalteinrichtung kann insbesondere von einem Kugelhahnventil ausgebildet sein. Es kommen aber auch andere Sperreinrichtungen in Frage, die Fluidleitungen öffnen oder schließen können, wie z.B. herkömmliche Ventile, Absperrschieber, oder andere geeignete Schalteinrichtungen.

Die Schalteinrichtung kann einen ersten Schaltzustand einnehmen, in dem sie eine kommunikative Verbindung zwischen der Dosierpumpe und dem Zielgerät bereitstellt. In diesem ersten Schaltzustand ist insbesondere eine kommunikative Verbindung zwischen dem Zielgerät und der Spülpumpe gesperrt, insbesondere Fluid-dicht gesperrt.

In dem zweiten Schaltzustand wird von der Schalteinrichtung eine kommunikative Verbindung zwischen der Spülpumpe und dem Zielgerät bereitgestellt. In diesem zweiten Schaltzustand ist insbesondere eine kommunikative Verbindung zwischen dem Zielgerät und der Dosierpumpe gesperrt, insbesondere fluiddicht gesperrt, weiter insbesondere druckfest fluiddicht gesperrt.

Die Schalteinrichtung ist von der Steuerung mittelbar oder unmittelbar ansprechbar.

Zur Durchführung eines Dosierprozesses kann die Dosiereinrichtung, beispielsweise nach Erhalt eines Medienanforderungskommandos von einem Zielgerät, zunächst die dem Zielgerät zugeordnete Schalteinrichtung ansprechen, um sie in ihren ersten Schaltzustand zu versetzen, oder um jedenfalls zu gewährleisten, dass sie ihren ersten Schaltzustand einnimmt.

Sodann kann die Steuerung die Dosierpumpe zur Entnahme des Mediums ansprechen, um eine vorherbestimmte Medienmenge aus dem Behältnis herauszupumpen und bis kurz hinter die Schalteinrichtung zu fördern.

Genau genommen findet eine Förderung der Medienmenge bis zu einer Stelle im Fluidleitungsweg statt, die in Förderrichtung hinter der Schalteinrichtung angeordnet ist, die sich also stromabwärts der Schalteinrichtung befindet.

Nach Durchführung der Förderung des Mediums kann die Steuerung die Schalteinrichtung erneut ansprechen und sie in ihren zweiten Schaltzustand überführen.

Sobald sich die Schalteinrichtung in ihrem zweiten Schaltzustand befindet ist eine kommunikative Verbindung zwischen der Spülpumpe und dem Zielgerät hergestellt. Zugleich ist die kommunikative Verbindung zwischen der Dosierpumpe und dem Zielgerät gesperrt, insbesondere fluiddicht und druckfest gesperrt.

Die förderleistungsstark ausgebildete Spülpumpe kann anschließend von der Steuerung angesprochen werden und aufgrund ihrer größeren Förderleistung Spülmittel oder Spülmedium, nämlich insbesondere Wasser, weiter, entlang der langen Fluidleitungswege bis zum Zielgerät spülen und dabei insbesondere das sich bereits stromabwärts der Schalteinrichtung befindende Medienvolumen bis zum Zielgerät fördern.

Dabei kann die für die langen Fluidleitungswege optimal ausgelegte Spülpumpe schnell und effizient Spülmedium zum Zwecke der Medienzuführung zu dem Zielbehältnis fördern.

Eine derartige Medienförderung, bei der das Zielgerät, das sogenannte Ziel, weit entfernt von der Dosiereinrichtung angeordnet ist, oder jedenfalls angeordnet werden kann, bezeichnet man fachmännisch auch Ziel-Spülen.

Dadurch, dass die erfindungsgemäße Dosiereinrichtung eine Dosierpumpe und eine davon gesondert angeordnete Spülpumpe aufweist, und dadurch, dass diese beiden unterschiedlichen Pumpen an ihre jeweilige technische Anforderung optimiert angepasst werden können, können auch die Wartungskosten einer erfindungsgemäßen Dosiereinrichtung gering gehalten, oder gegenüber dem Stand der Technik erheblich reduziert werden.

Die Schalteinrichtung der erfindungsgemäßen Dosiereinrichtung kann auch einen dritten Schaltzustand einnehmen. In ihrem dritten Schaltzustand dichtet die Schalteinrichtung insbesondere sämtliche Einlässe gegeneinander und auch gegenüber dem Auslass ab. Insbesondere sind in diesem dritten Schaltzustand der Schalteinrichtung alle Anschlüsse der Schalteinrichtung gegeneinander fluiddicht und druckfest gesperrt.

Insbesondere nach erfolgter Durchführung einer Zielspülung kann die Steuerung der Dosiereinrichtung die Schaltvorrichtung in ihren dritten Schaltzustand versetzen und jegliche Kommunikationswege dieser Schalteinrichtung druckfest und fluiddicht gegeneinander sperren. Dadurch ist einerseits die Spülpumpe sicher von dem an diese Schalteinrichtung angeschlossenen Zielgerät getrennt und für eine Durchführung von Zielspülungen an andere Zielgeräte verfügbar. Zugleich ist die der Schaltvorrichtung vorgeschaltete Dosierpumpe vor einem eventuell hohen statischen Systemdruck geschützt, der z.B. dann auftreten kann, wenn die Zielgeräte mit großer Höhendifferenz oberhalb der Dosiervorrichtung angeordnet sind.

Eine Spülpumpe im Sinne der Erfindung ist insbesondere von einem elektrischen oder elektromotorisch angetriebenen Gerät oder einer anderen Einrichtung bereitgestellt, die in der Lage ist, einen Förderdruck, z.B. einen Saugdruck, zu erzeugen, um Spülmedium durch eine Schalteinrichtung hindurch zu dem Zielgerät oder zu den unterschiedlichen Zielgeräten zu fördern.

Bei einer zweiten Alternative der Erfindung umfasst die erfindungsgemäße Dosiereinrichtung anstelle einer Spülpumpe eine Spüleinrichtung. Diese wird im Sinne der vorliegenden Erfindung alternativ zu einer Spülpumpe bereitgestellt. Die Spüleinrichtung ist ebenfalls dazu in der Lage, einen Förderdruck zur Förderung des Mediums bereitzustellen.

Die Spüleinrichtung im Sinne der Erfindung greift hierzu aber im Gegensatz zu einer Spülpumpe auf den in dem Hauswassernetz befindlichen Leitungsdruck zurück, um unter Zuhilfenahme dieses Leitungsdruckes das Spülmedium zu dem Zielgerät zu führen.

Bei Verwendung einer Spüleinrichtung ist ein gesondertes elektrisches oder ein elektromotorisches Gerät, das einen zusätzlichen Förderdruck generiert, nicht mehr erforderlich.

Die Erfindung greift somit bei der erfindungsgemäßen Dosiereinrichtung entweder auf eine Spülpumpe oder alternativ auf eine Spüleinrichtung zurück.

Eine Spüleinrichtung im Sinne der Erfindung kann insbesondere unter Zuhilfenahme einer Rohrtrenneinrichtung an das Hauswassernetz angeschlossen sein. Dabei wird insbesondere eine Rohrtrenneinrichtung verwendet, die in der Lage ist, den im Hauswassernetz befindlichen Wasserleitungsdruck auf nachgeschaltete Fluidleitungen durchzuschalten oder weiterzugeben.

Eine Spüleinrichtung im Sinne der Erfindung kann ein von einer Steuerung ansprechbares öffen- und schließbares Ventil oder ein manuell betätigbares Ventil umfassen. Eine Spüleinrichtung im Sinne der Erfindung kann aber auch vorsehen, dass eine Eingangsseite einer Schaltvorrichtung ohne Zwischenschaltung eines steuerbaren Ventils mit dem Hauswasseranschluss verbunden ist.

Eine Dosiereinrichtung im Sinne der vorliegenden Erfindung dient zur Förderung unterschiedlicher Chemikalien, die als Fluid vorliegen, und die zur Durchführung eines Wasch- oder Reinigungsprozesses benötigt werden. Hierzu gehören auch Chemikalien, die in Desinfektionsprozessen oder Sterilisationsprozessen, insbesondere im Rahmen von Wasch- oder Reinigungsprozessen, eingesetzt werden können.

Das Zielgerät im Sinne der Erfindung kann insbesondere von einer Waschmaschine bereitgestellt sein. Auch andere Arten von Zielgeräten, z.B. Spülmaschinen, Wasch- oder Reinigungsgeräte, Wasch- oder Reinigungsanlagen, Wasch- oder Reinigungsmaschinen, kommen als Zielgeräte in Betracht.

Die Erfindung ist insbesondere vorteilhaft anwendbar, wenn es sich bei dem Zielgerät um eine oder mehrere Tunnel-Waschmaschinen oder Tunnel-Spülmaschinen handelt.

Bei solchen Tunnel-Maschinen, Band-Maschinen oder Band-Anlagen werden beispielsweise Textilien zum Zwecke ihrer Reinigung durch eine Anlage hindurch gefördert, z.B. mithilfe eines Schnecken-Förderers, die unterschiedliche Bearbeitungs- oder Behandlungszonen aufweist. Hier kann das Erfordernis bestehen, dass verschiedenen Bereichen dieser Tunnel-Waschmaschine, insbesondere gleichzeitig, unterschiedliche Medien zugeführt werden müssen, um eine effiziente Bearbeitung durchzuführen. Mit der erfindungsgemäßen Dosiereinrichtung kann eine solche Tunnel-Waschanlage, die auch als Band-Waschanlage bezeichnet wird, effizient und zeitsparend mit Medien bedient werden.

Zur Vermeidung von Wiederholungen wird auf die nachfolgenden Druckschriften des Standes der Technik verwiesen, die auf die Anmelderin zurückgehen und die sämtlich Dosiereinrichtungen und Verfahren offenbaren: DE 10 2011 108 396 A1, DE 10 2011 119 021 A1, DE 10 2011 122 921 A1, DE 10 2012 012 913 A1, DE 10 2014 002 560 A1, DE 10 2014 010 126 A1, DE 10 2015 107 105 A1, DE 10 2015 107 976 A1, DE 10 2016 102 829 A1, DE 10 2017 103 168 B3, DE 10 2017 114 665 A1, DE 10 2017 114 767 A1, DE 10 2018 113 644 A1, DE 10 2018 122 651 A1, DE 10 2020 107 555 A1, DE 10 2020 107 558 A1, DE 10 2022 125 425 A1 und DE 10 2023 123 774 A1.

Der Inhalt dieser Schutzrechtsanmeldungen wird zur Vermeidung von Wiederholungen hiermit in den Inhalt der vorliegenden Patentanmeldung mit eingeschlossen, dies insbesondere auch zu dem Zweck, bei Bedarf Merkmale aus diesen Druckschriften in den Inhalt der vorliegenden Anmeldung, bei Bedarf auch in die Ansprüche der vorliegenden Anmeldung, mit aufzunehmen.

Ausführungsbeispiele der vorliegenden Patentanmeldung können mit jeglichen Merkmalen der Dosiereinrichtungen und Dosierverfahren der oben erwähnten Druckschriften des Standes der Technik, auch der eingangs erwähnten Druckschrift der Anmelderin, kombiniert werden. Jegliche dieser Kombinationen sind von Erfindung mit umfasst.

Gemäß einer vorteilhaften Ausgestaltung der Erfindung veranlasst die Dosiereinrichtung zur Durchführung eines Dosierprozesses unter Zuhilfenahme der Dosierpumpe eine Entnahme eines bestimmten Volumens an Medium aus dem Behältnis und eine Förderung dieses Volumens entlang eines ersten Fluidleitungsabschnittes in Richtung hin zu dem Zielgerät bis zu einer Stelle stromabwärts der Schalteinrichtung. Diese Ausgestaltung der Erfindung ermöglicht eine Funktionstrennung der Funktion der Dosierpumpe von der Funktion der Spülpumpe. Die Dosierpumpe fördert nur bis zu einer Stelle stromabwärts der Schalteinrichtung, aber nicht bis zum Zielgerät. Sie kann damit bezogen auf ihren Einsatzzweck optimiert ausgelegt werden.

Gemäß einer weiteren vorteilhaften Ausgestaltung der Erfindung ist die Dosierpumpe von der Steuerung zur Durchführung eines Dosierprozesses ansprechbar. Diese Ausgestaltung der Erfindung ermöglicht eine besonders effiziente Konstruktion einer erfindungsgemäßen Dosiereinrichtung. Insbesondere wird eine Bauform möglich, die nur noch einer Steuerung bedarf, oder die es jedenfalls ermöglicht, eine zentrale Steuerung einzusetzen.

Gemäß einer weiteren vorteilhaften Ausgestaltung der Erfindung ist die Spülpumpe von der Steuerung zur Durchführung eines Dosierprozesses ansprechbar. Diese Ausgestaltung der Erfindung ermöglicht eine besonders effiziente Konstruktion einer erfindungsgemäßen Dosiereinrichtung. Insbesondere wird eine Bauform möglich, die nur noch einer Steuerung bedarf, oder die es jedenfalls ermöglicht, eine zentrale Steuerung einzusetzen.

Gemäß einer weiteren vorteilhaften Ausgestaltung der Erfindung veranlasst die Dosiereinrichtung zur Durchführung des Dosierprozesses unter Zuhilfenahme der Spülpumpe eine Förderung des Volumens entlang eines zweiten Fluidleitungsabschnittes von der Stelle stromabwärts der Schalteinrichtung bis zu dem Zielgerät. Diese Ausgestaltung der Erfindung ermöglicht eine optimierte Auslegung der Spülpumpe für den der Spülpumpe zugrunde liegenden Einsatzzweck. Hierdurch kann eine besonders für diesen Einsatzzweck geeignete Spülpumpe konstruiert oder ausgewählt und eingesetzt werden.

Gemäß einer weiteren vorteilhaften Ausgestaltung der Erfindung beträgt die Länge des zweiten Fluidleitungsabschnittes mehr als 5m, insbesondere mehr als 10m, insbesondere bis zu mehreren zehn Metern. Diese Ausgestaltung der Erfindung ermöglicht eine Dosierung und Förderung von Medien zu Zielgeräten, die sehr weit von der Dosiereinrichtung entfernt angeordnet sind.

Gemäß einer weiteren vorteilhaften Ausgestaltung der Erfindung ist die Dosiereinrichtung eingangsseitig mit wenigstens einem Behältnis verbunden, das mit einem Medium befüllt ist. Diese Ausgestaltung der Erfindung ermöglicht einen Rückgriff auf bekannte Teile und Komponenten.

Gemäß einer weiteren vorteilhaften Ausgestaltung der Erfindung ist die Dosiereinrichtung eingangsseitig mit mehreren Behältnissen verbunden. Diese Ausgestaltung der Erfindung ermöglicht eine Dosierung und Zuführung unterschiedlicher Medien zu einem oder unterschiedlichen Zielgeräten. Von dieser Ausgestaltung ist auch umfasst, wenn in den Behältnissen nicht unterschiedliche Medien angeordnet sind, sondern nur eine Art von Medium angeordnet ist.

Gemäß einer weiteren vorteilhaften Ausgestaltung der Erfindung sind die mehreren Behältnisse mit unterschiedlichen Medien befüllt. Diese Ausgestaltung der Erfindung ermöglicht eine Dosierung und Zuführung unterschiedlicher Medien zu einem Zielgerät oder zu unterschiedlichen Zielgeräten.

Gemäß einer weiteren vorteilhaften Ausgestaltung der Erfindung sind die Dosierpumpe und die Spülpumpe unterschiedlich ausgebildet und umfassen insbesondere unterschiedliche Pumpenarten. Diese Ausgestaltung der Erfindung ermöglicht eine optimierte Auslegung der Pumpen und eine besonders vorteilhafte Ausgestaltung der beiden Pumpen und einen Rückgriff auf kommerziell erhältliche Komponenten.

Gemäß einer weiteren vorteilhaften Ausgestaltung der Erfindung ist die Dosierpumpe zur Förderung geringer Volumina und/oder zur Förderung entlang kurz gehaltener Fluidleitungsabschnitte und/ oder zur Förderung entlang nur geringer Höhendifferenzen ausgebildet. Diese Ausgestaltung der Erfindung ermöglicht eine besonders vorteilhafte Ausgestaltung der Dosierpumpe, aber auch der Spülpumpe, und einen Rückgriff auf kommerziell erhältliche Komponenten.

Gemäß einer weiteren vorteilhaften Ausgestaltung der Erfindung ist die Spülpumpe zur Förderung großer Volumina, insbesondere entlang lang ausgebildeter Fluidleitungsabschnitte und/ oder zur Förderung entlang großer Höhendifferenzen ausgebildet. Diese Ausgestaltung der Erfindung ermöglicht eine besonders vorteilhafte Ausgestaltung der beiden Pumpen und einen Rückgriff auf kommerziell erhältliche Komponenten.

Gemäß einer weiteren vorteilhaften Ausgestaltung der Erfindung ist die Dosierpumpe von einer Schlauchpumpe bereitgestellt. Diese Ausgestaltung der Erfindung ermöglicht einen Rückgriff auf herkömmliche Pumpen und Bauteile.

Gemäß einer weiteren vorteilhaften Ausgestaltung der Erfindung ist die Spülpumpe von einer Membranpumpe oder von einer Kreiselpumpe bereitgestellt. Diese Ausgestaltung der Erfindung ermöglicht einen Rückgriff auf herkömmliche Pumpen und Bauteile.

Alternativ weist die Dosiereinrichtung eine Spüleinrichtung auf, die sich zur Förderung des Spülmediums zu dem Zielgerät des Leitungsdruckes bedient, der im Leitungsnetz des Hauswassernetzes herrscht. Die Spüleinrichtung kann ohne einen eigenen Förderantrieb ausgestaltet sein, und beispielsweise dafür sorgen, dass die Schalteinrichtungen zum Zwecke der Durchführung einer Zielspülung unmittelbar mit dem Hauswassernetzanschluss verbunden werden. Der dort herrschende Leitungsdruck kann für eine Förderung des Spülmediums hin zu dem Zielgerät, und damit für die Durchführung der Zielspülung, genutzt werden.

Vorteilhaft weist bei diesen Ausführungsbeispielen die Spüleinrichtung eine Trenneinrichtung auf, die eine chemische oder bakteriologische Kontamination des Hauswassernetzes sicher verhindert. Diese Trenneinrichtung ist dazu ausgebildet, den Leitungsdruck des Hauswassernetzes auf nachgeschaltete Fluidleitungen zu übertragen bzw. durchzulassen, sodass dieser Leitungsdruck zur Förderung des Spülmediums zu den Zielgeräten genutzt werden kann.

Gemäß einer weiteren vorteilhaften Ausgestaltung der Erfindung umfasst die Dosiereinrichtung mehrere Schalteinrichtungen. Diese Ausgestaltung der Erfindung ermöglicht eine Förderung und Dosierung von Medien zu unterschiedlichen Zielgeräten. Dabei kann insbesondere gleichzeitig zu mehreren Zielgeräten eine Förderung von Medien und/ oder eine Förderung von Spülmedium durchgeführt werden. Insbesondere können die Spülpumpe und die Dosierpumpe erfindungsgemäß gleichzeitig oder zeitlich überlappend betrieben werden.

Gemäß einer Variante dieser Ausgestaltung der Erfindung sind die mehreren Schalteinrichtungen zu einer Einheit, insbesondere zu einem Baukörper, zusammengefasst. Mehrere Schalteinrichtungen können z.B. entlang einer Geraden angeordnet sein, und/ oder z.B. an einem gemeinsamen Träger oder Gestell angeordnet oder befestigt sein. Dies vereinfacht die Konstruktion und ermöglicht Vorteile in der elektrischen Beschaltung und/ oder in der Anordnung von Fluidleitungen und/ oder von elektrischen Leitungen. Auch kann auf diese Weise eine besonders materialsparende Anordnung aber auch eine kompakte Bauform mehrerer Schalteinrichtungen erreicht werden.

Diese Ausgestaltung ermöglicht aber auch, dass diese mehreren Schalteinrichtungen vereinzelt angeordnet sind, mehrere Schalteinrichtungen also z.B. voneinander beabstandet angeordnet sind.

Die Schalteinrichtungen können über einzelne oder gemeinsame Signal- oder Steuerleitungen von einer Steuerung der Dosiereinrichtung oder von einer Unter-Steuerung angesprochen werden. Z.B. können die Signal- oder Steuerleitungen in Form einer Sternschaltung angeordnet sein.

Die Erfindung umfasst alternativ aber auch, dass die Signalleitungen nach Art einer Busleitung ausgebildet sind, oder mehradrig ausgebildet sind.

Gemäß einer weiteren vorteilhaften Ausgestaltung der Erfindung umfasst die Dosiereinrichtung eine Mischverteilereinrichtung, unter deren Zuhilfenahme jeweils eine ausgewählte der mehreren Schalteinrichtungen kommunikativ mit der Dosierpumpe verbindbar ist. Diese Ausgestaltung der Erfindung ermöglicht einen Rückgriff auf herkömmliche Mischverteilervorrichtungen, insbesondere der Anmelderin. Insbesondere kann eine Mischverteilereinrichtung eingesetzt werden, wie sie in den eingangs beschriebenen, auf die Anmelderin zurückgehenden Druckschriften offenbart ist, auf die zur Vermeidung von Wiederholungen verwiesen wird.

Gemäß einer weiteren vorteilhaften Ausgestaltung der Erfindung ist die Dosiereinrichtung mit mehreren Zielgeräten verbunden. Diese Ausgestaltung der Erfindung ermöglicht eine Zufuhr von Medien zu mehreren Zielgeräten.

Gemäß einer weiteren vorteilhaften Ausgestaltung der Erfindung ist die Dosiereinrichtung eingangsseitig über wenigstens eine Rohrtrenneinrichtung mit dem Hauswasseranschluss verbunden. Diese Ausgestaltung der Erfindung ermöglicht einen Rückgriff auf herkömmliche Bauteile und Komponenten und eine sichere Betriebsweise. Diese Ausgestaltung der Erfindung ermöglicht insbesondere eine Bereitstellung von Wasser zum Zwecke der Spülung der Fluidleitungswege bis zu der Stelle stromabwärts der Schalteinrichtung.

Gemäß einer weiteren vorteilhaften Ausgestaltung der Erfindung ist die Schalteinrichtung von einem motorisch angetriebenen Kugelhahn bereitgestellt. Diese Ausgestaltung der Erfindung ermöglicht einen Rückgriff auf herkömmliche Bauteile und Komponenten und eine sichere Betriebsweise.

Gemäß einer weiteren vorteilhaften Ausgestaltung der Erfindung ist die Schalteinrichtung von einem Mehr-Wege-Ventil bereitgestellt. Insbesondere ist vorgesehen, dass die Schalteinrichtung als Drei-Wege-Ventil ausgebildet ist oder dass die Schalteinrichtung als Vier-Wege-Ventil ausgebildet ist. Diese Ausgestaltung der Erfindung ermöglicht einen Rückgriff auf herkömmliche Bauteile und Komponenten und eine sichere Betriebsweise.

Gemäß einer weiteren vorteilhaften Ausgestaltung der Erfindung sperrt die Schalteinrichtung in ihrem zweiten Schaltzustand die kommunikative Verbindung zwischen der Dosierpumpe und dem Zielgerät, insbesondere druckfest. Diese Ausgestaltung der Erfindung ermöglicht eine besonders sichere Betriebsweise der erfindungsgemäßen Vorrichtung.

Gemäß einer weiteren vorteilhaften Ausgestaltung der Erfindung ist vorgesehen, dass die Schalteinrichtung einen dritten Schaltzustand einnehmen kann, in dem sämtliche ihrer Einlässe gegeneinander und gegenüber dem Auslass gesperrt, insbesondere druckfest gesperrt sind.

Gemäß einer weiteren vorteilhaften Ausgestaltung der Erfindung sperrt die Schalteinrichtung in einem dritten Schaltzustand sämtliche Einlässe und den Auslass gegeneinander fluiddicht und insbesondere druckfest ab. Dies ermöglicht eine besonders sichere Betriebsweise der Dosiereinrichtung.

Die Erfindung bezieht sich gemäß einem weiteren Aspekt auf ein Verfahren nach Anspruch 11.

Der Erfindung liegt die Aufgabe zugrunde, ein Verfahren anzugeben, mit dem eine Dosierung und Förderung von Medien auch dann effizient, sicher und kostensparend durchgeführt werden kann, wenn zwischen dem Behältnis, in dem sich das Medium befindet und dem Zielgerät, lange Fluidleitungswege angeordnet sind, oder wenn das Medium über eine große Höhendifferenz gefördert werden muss.

Die Erfindung löst diese Aufgabe mit den Merkmalen des Anspruches 11.

Zur Vermeidung von Wiederholungen wird bezüglich der Darstellung der Funktionsweise des Verfahrens und der Bedeutung der Merkmale dieses Anspruches auf die obigen Ausführungen zu den Ansprüchen 1 bis 10 und zu den weiteren Ausführungsbeispielen verwiesen.

Die Erfindung bezieht sich gemäß einem weiteren Aspekt auf ein Verfahren nach Anspruch 12.

Der Erfindung liegt die Aufgabe zugrunde, ein Verfahren anzugeben, mit dem eine Dosierung und Förderung von Medien auch dann effizient, sicher und kostensparend durchgeführt werden kann, wenn zwischen dem Behältnis, in dem sich das Medium befindet und dem Zielgerät, lange Fluidleitungswege angeordnet sind, oder wenn das Medium über eine große Höhendifferenz gefördert werden muss.

Die Erfindung löst diese Aufgabe mit den Merkmalen des Anspruches 12.

Zur Vermeidung von Wiederholungen wird hiermit auf die obigen Ausführungen zu den Ansprüchen 1 bis 11 verwiesen.

Die Erfindung bezieht sich gemäß einem weiteren Aspekt auf eine Dosiereinrichtung nach Anspruch 13.

Ausgehend von der eingangs beschriebenen Dosiereinrichtung des Standes der Technik besteht die Aufgabe der Erfindung darin, eine Dosiereinrichtung bereitzustellen, die auch bei großen Leitungslängen zwischen Behältnis und Zielgerät und/ oder bei großen zu überwindenden Höhendifferenzen entlang der Fluidleitungen eine sichere zuverlässige und schnelle Förderung von Medien ermöglicht.

Die Erfindung löst diese Aufgabe mit den Merkmalen des Anspruches 13.

Zur Vermeidung von Wiederholungen wird bezüglich der Darstellung der Funktionsweise des Verfahrens und der Bedeutung der Merkmale dieses Anspruches auf die obigen Ausführungen zu den Ansprüchen 1 bis 10 verwiesen.

Die Dosiereinrichtung sieht nach Anspruch 13 eine dritte Pumpe, die sogenannte Verdünnungspumpe, vor. Die Verdünnungspumpe kann bei bestimmten Medien, die eine Verdünnung mit Wasser erfordern, um ihre Förderfähigkeit zu verbessern, zum Zwecke der Förderung bis an eine Stelle stromabwärts der Schalteinrichtung mit zusätzlichem Spülmedium, nämlich mit Wasser, verdünnt werden.

Hierzu kann eine Verdünnungspumpe vorgesehen sein, die insbesondere von der Steuerung der Dosiereinrichtung ansprechbar ist, um bei Bedarf zusätzliches Spülwasser zum Zwecke der Verdünnung zuzuführen.

Die Schalteinrichtung kann bei dieser Ausführungsform derartig ausgebildet sein, dass sie einen ersten Schaltzustand einnehmen kann, in dem sie eine kommunikative Verbindung zwischen der Dosierpumpe, der Verdünnungspumpe, und dem Zielgerät herstellt. Die Verdünnungspumpe kann insbesondere zeitgleich zu der Dosierpumpe betrieben werden oder zu einem Zeitpunkt unmittelbar nachdem die Dosierpumpe den Dosiervorgang abgeschlossen hat.

Bei dieser Variante ist die Dosierpumpe insbesondere druckdicht gegenüber dem von der Verdünnungspumpe generierten Förderdruck ausgebildet.

Die Verdünnungspumpe kann über einen Verdünnungs-Bypass an die Fluidleitung, insbesondere stromabwärts der Dosierpumpe angeschlossen sein. Der Verdünnungs-Bypass kann bei einem Ausführungsbeispiel der Erfindung über ein ebenfalls von der Steuerung der Dosiereinrichtung ansprechbares Ventil geöffnet oder geschlossen werden.

Die Erfindung bezieht sich gemäß einem weiteren Aspekt auf eine Dosiereinrichtung nach Anspruch 14.

Ausgehend von dem eingangs beschriebenen Stand der Technik besteht die Aufgabe der Erfindung darin, eine Dosiereinrichtung bereitzustellen, die auch bei großen Leitungslängen zwischen Behältnis und Zielgerät und/ oder bei großen zu überwindenden Höhendifferenzen entlang der Fluidleitungen eine sichere, zuverlässige und schnelle Förderung von Medien ermöglicht.

Die Erfindung löst diese Aufgabe mit den Merkmalen des Anspruches 14.

Das Prinzip dieser Erfindung besteht darin, eine Dosiereinrichtung zur Verfügung zu stellen, die auch solche Medien effizient fördern kann, die bereits frühzeitig eine Verdünnung mit Spülmittel, also mit Wasser, erfordern.

Hierzu geht insbesondere von der Fluidleitung, die zwischen der Spülpumpe und der Schalteinrichtung angeordnet ist, ein Verdünnungs-Bypass ab. Der Verdünnungs-Bypass trifft auf die Fluidleitung insbesondere zwischen Dosierpumpe und Schalteinrichtung, insbesondere an einer Stelle unmittelbar stromabwärts der Dosierpumpe. Der Verdünnungs-Bypass kann insbesondere über ein von der Steuerung ansprechbares Ventil zugeschaltet werden oder abgeschaltet bleiben, also geöffnet oder geschlossen werden. Eine Zuschaltung kann bei Bedarf erfolgen, also z.B. immer nur dann, wenn ein bestimmtes Medium gefördert wird, welches eine zusätzliche Verdünnung erfordert.

Die Schalteinrichtung kann, wie bei einer Dosiereinrichtung nach Anspruch 1, zwei Schaltzustände aufweisen. In einem ersten Schaltzustand verbindet sie die Dosierpumpe kommunikativ mit dem Zielgerät und in dem zweiten Schaltzustand verbindet sie die Spülpumpe kommunikativ mit dem Zielgerät.

In dem ersten Schaltzustand verbindet die Schalteinrichtung aber auch den Verdünnungs-Bypass kommunikativ mit dem Zielgerät, dies jedenfalls unter der Voraussetzung, dass das Ventil - so denn ein Ventil vorgesehen wird - geöffnet ist.

Die Erfindung bezieht sich gemäß einem weiteren Aspekt auf eine Dosiereinrichtung nach Anspruch 15.

Ausgehend von dem eingangs beschriebenen Stand der Technik besteht die Aufgabe der Erfindung darin, eine Dosiereinrichtung bereitzustellen, die auch bei großen Leitungslängen zwischen Behältnis und Zielgerät und/ oder bei großen zu überwindenden Höhendifferenzen entlang der Fluidleitungen eine sichere, zuverlässige und schnelle Förderung von Medien ermöglicht.

Die Erfindung löst diese Aufgabe mit den Merkmalen des Anspruches 15.

Hier trifft der Verdünnungs-Bypass auf das Fluidleitungssystem zur Förderung der Medien unmittelbar stromabwärts der Dosierpumpe, oder jedenfalls stromaufwärts der Schalteinrichtung.

Gemäß einer Alternative dieser Erfindung trifft der Verdünnungs-Bypass im Bereich der Schalteinrichtung auf die Fluidleitung.

Hier kann die Schalteinrichtung so ausgebildet sein, dass ein kurz gehaltener, z.B. mit einer Drossel ausgestatteter Verdünnungs-Bypass unmittelbar zu der Schalteinrichtung führt oder unmittelbar an der Schalteinrichtung vorgesehen ist.

Auch hier kann die Spülpumpe den oder die entsprechenden Verdünnungs-Bypässe mit Spülmedium beschicken, also mit Spülmedium beaufschlagen. Auch hier wird neben der Dosierpumpe und der Spülpumpe keine gesonderte Pumpe gefordert.

Für die Erfindung nach den Ansprüchen 13 bis 15 ist von Bedeutung, dass die Dosierpumpe zur Förderung von Medien betrieben werden kann, und zeitgleich über einen Verdünnungs-Bypass, sei es von einer gesonderten Verdünnungs-Pumpe oder von der Spülpumpe, ein Verdünnungsmedium, nämlich Wasser, zugeführt werden kann.

Weitere Vorteile der Erfindung ergeben sich anhand der nicht zitierten Unteransprüche sowie aus der nachfolgenden Beschreibung der in den Zeichnungen dargestellten Ausführungsbeispiele.

Darin zeigen:

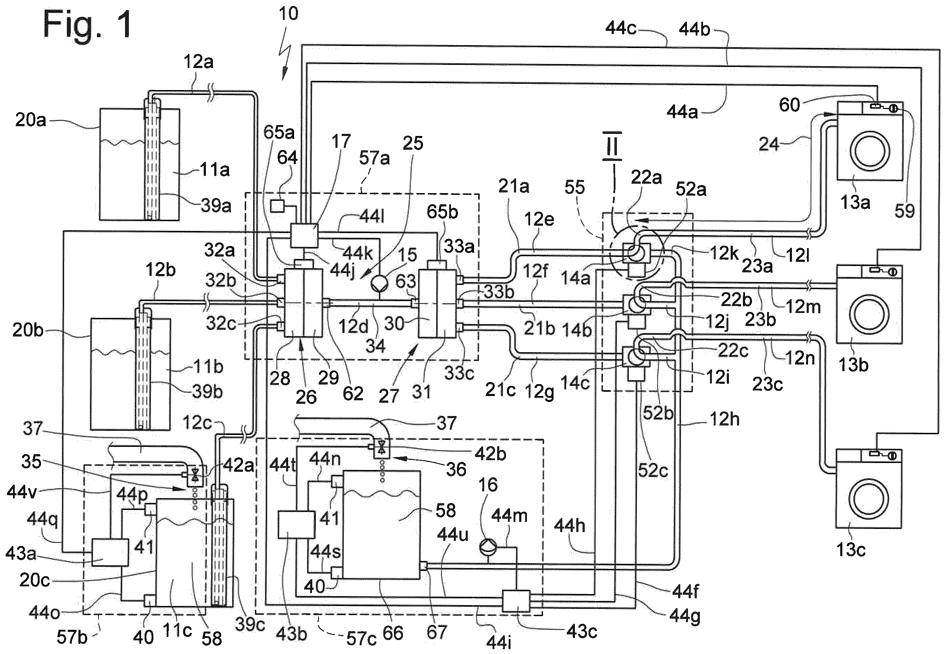

- Fig. 1: in einer schematischen, teilgeschnittenen, blockschaltbildartigen Ansicht ein erstes Ausführungsbeispiel einer erfindungsgemäßen Dosiereinrichtung, mit zwei eingangsseitig angeschlossenen Behältnissen, die mit unterschiedlichen Medien befüllt sind und mit einem eingangsseitig angeschlossenen Behältnis mit Wasser als Spülmedium, sowie mit einer Mischverteilereinrichtung, mit einer Dosierpumpe, und mit einer Vielzahl an Fluidleitungen, über die die Dosiereinrichtung mit drei Zielgeräten verbindbar ist, wobei jedem Zielgerät eine Schalteinrichtung zugeordnet ist, und mit einer Spülpumpe, die stromaufwärts der Schalteinrichtungen angeordnet ist und die von einem gesonderten Wasser-Depot versorgt wird,
- Fig. 2: in einer vergrößerten schematischen Ansicht, etwa gemäß Teilkreis II in Fig. 1, eine schematische Prinzipdarstellung einer Schalteinrichtung mit einem Ventilkörper zur Veranschaulichung der Schaltwege,
- Fig. 3: die Schalteinrichtung der Fig. 2 mit einer geänderten Ventilkörperstellung,
- Fig. 4: in einer teilgeschnittenen schematischen Ansicht, etwa entlang Ansichtspfeil IV in Fig. 3, die Schalteinrichtung der Fig. 3 in teilgeschnittener, schematischer Seitenansicht zur Darstellung des Zusammenwirkens eines Motors mit dem Ventilkörper,
- Fig. 5: die Schalteinrichtung der Fig. 2 mit einer geänderten Stellung des Ventilkörpers, wobei die Schalteinrichtung in einem dritten Schaltzustand dargestellt ist, in dem sämtliche Einlässe und der Auslass gegeneinander fluiddicht, insbesondere druckfest gesperrt sind,
- Fig. 6: ein weiteres Ausführungsbeispiel einer erfindungsgemäßen Dosiereinrichtung in einer Darstellung gem. Fig. 1, bei der die drei Schalteinrichtungen vereinzelt angeordnet sind,
- Fig. 7: ein weiteres Ausführungsbeispiel einer erfindungsgemäßen Dosiereinrichtung in einer Darstellung gemäß Fig. 1, bei der eine gemeinsame Rohrtrenneinrichtung und ein gemeinsames Wasserdepot vorgesehen ist,
- Fig. 8a: in einer Darstellung gemäß Fig. 1 ein weiteres Ausführungsbeispiel einer erfindungsgemäßen Dosiereinrichtung mit einer zusätzlichen Verdünnungspumpe, die über ein schaltbares Ventil zuschaltbar ist,
- Fig. 8b: ein weiteres Ausführungsbeispiel einer erfindungsgemäßen Dosiereinrichtung in einer Darstellung gemäß Fig. 8a, wobei das schaltbare Ventil entfallen ist,
- Fig. 8c: ein weiteres Ausführungsbeispiel einer erfindungsgemäßen Dosiereinrichtung in einer Darstellung gemäß Fig. 8a, wobei anstelle eines schaltbaren Ventils ein insbesondere passives Rückschlagventil vorgesehen ist,
- Fig. 9: ein weiteres Ausführungsbeispiel einer erfindungsgemäßen Dosiereinrichtung in einer Darstellung gem. Fig. 1, wobei die Spülpumpe über einen Verdünnungsbypass verfügt,
- Fig. 10: ein weiteres Ausführungsbeispiel einer erfindungsgemäßen Dosiereinrichtung in einer Darstellung gemäß Fig. 1, wobei die Schalteinrichtungen jeweils als Vier-Wege-Ventil ausgebildet sind, und einen Verdünnungsbypass umfassen,
- Fig. 11: in einer schematischen Prinzipdarstellung gemäß Fig. 2, eine Schalteinrichtung des Ausführungsbeispiels der Fig. 10, die als Vier-Wege-Schalteinrichtung, etwa gemäß einer Darstellung des Teilkreises XI in Fig. 10,
- Fig. 12: die Schalteinrichtung gemäß Figur 11 in einer geänderten Position des Ventilkörpers,
- Fig. 13: die Schalteinrichtung der Figur 11 in einer weiteren, geänderten Position des Ventilkörpers,
- Fig. 14: in einer Darstellung ähnlich der Darstellung der Figuren 11 bis 13 ein weiteres Ausführungsbeispiel einer Schalteinrichtung, die fünf unterschiedliche Schaltzustände einnehmen kann, in einem ersten Schaltzustand, wobei die Schalteinrichtung einen Ventilkörper in Form einer Kugel aufweist, die drei senkrecht zueinander stehende Kanalabschnitte aufweist, wobei der nicht dargestellte Ausgangskanal in Blickrichtung des Betrachters aus der Papierebene heraustretend angeordnet ist, wobei Fig. 14 einen Schaltzustand zeigt, in dem nur Medium gefördert wird,
- Fig. 15: das Ausführungsbeispiel der Fig. 14 in einem geänderten Schaltzustand,
- Fig. 16: das Ausführungsbeispiel der Fig. 15 in einem geänderten Schaltzustand,
- Fig. 17: das Ausführungsbeispiel der Fig. 16 in einem geänderten Schaltzustand,
- Fig. 18: das Ausführungsbeispiel der Fig. 17 in einen geänderten Schaltzustand,
- Fig. 19: ein weiteres Ausführungsbeispiel einer erfindungsgemäßen Dosiereinrichtung in einer Darstellung gemäß Fig. 1, wobei ein zweiter Teil einer Mischverteilereinrichtung entfallen ist und wobei die Leitungsführung zwischen der Dosierpumpe und den Schalteinrichtungen geändert ist,
- Fig. 20: ein weiteres Ausführungsbeispiel in einer Darstellung gemäß Fig. 1, wobei anstelle einer Spülpumpe eine Spüleinrichtung vorgesehen ist, die den Leitungsdruck des Hauswassernetzes zur Förderung von Spülmedium zu dem Zielgerät nutzt,
- Fig. 21: ein weiteres Ausführungsbeispiel in einer Darstellung gemäß Figur 20, wobei eine geänderte Spüleinrichtung vorgesehen ist, und
- Fig. 22: ein weiteres Ausführungsbeispiel in einer Darstellung gemäß Fig. 21, wobei ausgehend von dem Ausführungsbeispiel der Fig. 8a die dort vorgesehene Verdünnungspumpe durch eine Verdünnungseinrichtung, ersetzt ist, die an das Hauswassernetz angeschlossen ist, und die den Leitungsdruck im Hauswassernetz zur Förderung des Spülmediums zum Zielgerät nutzt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein erstes Ausführungsbeispiel einer erfindungsgemäßen Dosiereinrichtung ist in Figur 1 in seiner Gesamtheit mit dem Bezugszeichen 10 bezeichnet.

Die Dosiereinrichtung 10 kann eine Vielzahl von Teilen und Komponenten umfassen. Sie kann insbesondere kompakt ausgebildet sein und alle Teile und Komponenten integrieren. Sie kann aber auch, wie in Figur 1 dargestellt, mehrere Funktionseinheiten 57a, 57b, 57c umfassen, die miteinander verbunden sind und die insgesamt die Dosiereinrichtung 10 ausbilden.

Eingangsseitig wird die Dosiereinrichtung 10 mit Medien 11a, 11b, 11c versorgt. Die Medien 11a, 11b sind unterschiedliche Medien, und zwar insbesondere unterschiedliche Chemikalien, die z.B. für eine Wasch- oder Reinigungsprozedur in einem Zielgerät 13a, 13b, 13c benötigt werden.

Die Medien 11a und 11b können z.B. unterschiedliche Reinigungsmittel- oder Waschmittelbestandteile sein.

Das Medium 11c kann ein Spülmedium 58, insbesondere Wasser sein.

Die Medien 11a, 11b, 11c befinden sich jeweils in einem Behältnis 20a, 20b, 20c, in einem sogenannten Gebinde.

Eine Entnahme des Mediums 11a, 11b, 11c aus dem Behältnis 20a, 20b, 20c kann unter Zuhilfenahme einer Sauglanze 39a, 39b, 39c erfolgen, die jeweils über eine Fluidleitung 12a, 12b, 12c an einen Eingang oder Einlass 32a, 32b, 32c der Dosiereinrichtung 10 angeschlossen ist.

Die Dosiereinrichtung 10 ist dazu ausgebildet, die Medien 11a, 11b, 11c in einer vorherbestimmten Menge über Fluidleitungen zu jeweils einem ausgewählten Zielgerät 13a, 13b, 13c zu fördern.

Die Zielgeräte 13a, 13b, 13c sind bei dem Ausführungsbeispiel der Figur 1 als gewerbliche Waschmaschinen 13a, 13b, 13c ausgebildet. Auch andere Zielgeräte, wie z.B. gewerbliche Spülmaschinen, oder Wasch- oder Reinigungsanlagen, insbesondere Tunnel-Anlagen, kommen im Zusammenhang mit der Benutzung der Erfindung in Frage.

Bei dem Ausführungsbeispiel der Figur 1 weist das Zielgerät 13a einen Programmwahlschalter 59 auf, mit dem z.B. ein bestimmtes Wasch- oder Reinigungsprogramm einstellbar ist. Das Zielgerät 13a verfügt darüber hinaus über eine Steuerung 60, die mit dem Programmwahlschalter 59 verbunden ist.

Wenn das Zielgerät 13a einen Waschprozess oder Reinigungsprozess durchführt, und zu einem bestimmten Zeitpunkt ein bestimmtes Medium 11a in einer bestimmten Menge benötigt, kann das Zielgerät 13a über die Steuerung 60 und über die Signalleitung 44a ein entsprechendes Medien-Anforderungskommando an eine Steuerung 17 der Dosiereinrichtung 10 übermitteln.

Die Dosiereinrichtung 10 kann einen Speicher 64 aufweisen, in dem zu den Dosierkommandos Informationen abgelegt sind.

Infolge des Erhalts eines Medien-Anforderungskommandos kann die Steuerung 17 über eine Signal-Verbindungsleitung 44h eine Schalteinrichtung 14a ansprechen, was später erläutert wird, und über eine Signal-Verbindungsleitung 44j einen Antrieb 65a ansprechen, der auf einen ersten Teil 26 einer Mischverteilereinrichtung 25 einwirkt.

Des Weiteren kann die Steuerung 17 über eine Signalleitung 44l einen Antrieb 65b eines zweiten Teils 27 der Mischverteilereinrichtung 25 ansprechen.

Der erste Teil 26 der Mischverteilereinrichtung 25 umfasst eine Eingangsscheibe 28 und eine Ausgangsscheibe 29, die relativ zueinander durch den Antrieb 65a verlagerbar, insbesondere drehbar sind. Dabei kann in Folge einer relativen Drehung jeweils einer der Einlässe 32a, 32b, 32c mit dem Auslass 62 in kommunikative Verbindung gebracht werden und so der gewünschte Kommunikationsweg zwischen dem gewünschten Medium 11a, 11b, 11c und dem Auslass 62 des ersten Teils 26 bereitgestellt werden. Der zweite Teil 27 der Mischverteilereinrichtung 25 weist eine Eingangsscheibe 30 mit einem Einlass 63 und eine relativ dazu verlagerbare, insbesondere drehbare Ausgangsscheibe 31 mit mehreren Auslässen 33a, 33b, 33c auf.

In den unterschiedlichen relativen Drehpositionen der Scheiben 30, 31 kann der Einlass 63 des zweiten Teils 27 der Mischverteilereinrichtung 25 mit einem wählbaren Auslass 33a, 33b, 33c in kommunikative Verbindung gebracht werden. Auf diese Weise kann der Kommunikationsweg hin zu dem gewünschten Zielgerät 13a geschaltet werden.

Infolge des Erhalts eines Medien-Anforderungskommandos von dem Zielgerät 13a durch die Steuerung 17, kann die Steuerung 17 z.B. veranlassen, dass ein Kommunikationsweg zwischen dem Behältnis 20a und dem Auslass 62 und dem Zielgerät 13a geschaltet wird.

Alle übrigen Kommunikationswege zwischen den Behältnissen 20a, 20b, 20c und den Zielgeräten13a, 13b, 13c sind dann gesperrt.

Nun kann die Steuerung 17 über eine Signalleitung 44k auf die Dosierpumpe 15 einwirken und diese ansprechen. Die Dosierpumpe 15 kann z.B. als eine Schlauchpumpe 15 ausgebildet sein, und auf den Fluidleitungsabschnitt 12d, der auch als Zwischenleitungsabschnitt 34 bezeichnet wird, einwirken, und z.B. darin einen Saugdruck generieren.

Die Dosierpumpe 15 ist z.B. als Schlauchpumpe ausgebildet. Sie dient der präzisen Förderung vorherbestimmter definierter Volumina oder Mengen an Medium.

Die Dosierpumpe 15 fördert die vorherbestimmte Menge an Medium 11a in den Fluidleitungsabschnitt 12e und weiter bis hinter eine später zu erläuternde Schalteinrichtung 14a.

Zum nachfolgenden Spülen der Fluidleitungswege 12d, 12e und insbesondere der nicht dargestellten Durchlasskanäle in den beiden Teilen 26 und 27 der Mischverteilereinrichtung 25, kann die Dosiereinrichtung 10 über die Steuerung 17 den Antrieb 65a derart ansprechen, dass nachfolgend jeder Förderung eines Mediums 11a, 11b immer das Wasser-Depot 20c in kommunikative Verbindung mit dem Zwischenleitungsabschnitt 34 gebracht wird, und infolge eines erneuten Ansprechens der Dosierpumpe eine Spülung der Leitungswege erfolgt.

Die Dosiereinrichtung 10 ist so konfiguriert, dass das zu fördernde Volumen an Medium 11a in Folge der Förderarbeit der Dosierpumpe 15 jedenfalls bis zu einer Stelle 22a oder Position in den Fluidleitungsabschnitten gelangt, die stromabwärts der Schalteinrichtung 14a liegt.

Diese Stelle ist in Figur 1 mit dem Bezugszeichen 22a bezeichnet.

Angemerkt sei, dass die Stelle 22a auch weiter stromabwärts der Schalteinrichtung 14a liegen kann, als dargestellt.

Die zuvor beschriebene Förderung des Mediums 11a in einer vorherbestimmten Menge, bis zu einer Stelle 22a stromabwärts der Schalteinrichtung 14a, setzt voraus, dass die Schalteinrichtung 14a zuvor über die Signalleitung 44h und 44i von der Steuerung 17 über die Unter-Steuerung 43c angesprochen worden ist und in einen ersten Schaltzustand 18 versetzt worden ist, in der sie den Fluidleitungsabschnitt 12e in kommunikative Verbindung mit dem Zielgerät 13a gebracht hat. Angemerkt sei, dass dieser erster Schaltzustand 18 in Figur 1 nur für die Schalteinrichtung 14a dargestellt ist.

Die beiden übrigen Schalteinrichtungen 14b, 14c sind in Fig. 1 in ihrer zweiten Schaltposition dargestellt.

Angemerkt sei, dass ausweislich der Darstellung der Figur 1 die Unter-Steuerung 43c über eine Signal- und Verbindungsleitung 44i mit der Steuerung 17 der Dosiereinrichtung 10 verbunden ist.

In einem alternativen, in den Figuren nicht dargestellten, Ausführungsbeispiel können die Steuerung 17 und die Unter-Steuerung 43c von einem gemeinsamen Bauelement bereitgestellt sein.

Nach erfolgter Förderung des gewünschten Volumens an Medium 11a bis zu der Stelle 22a, kann die Steuerung 17 - insbesondere unmittelbar, oder unter Zuhilfenahme der Unter-Steuerung 43c - die Schalteinrichtung 14a veranlassen, in einem zweiten Schaltzustand 19 zu schalten.

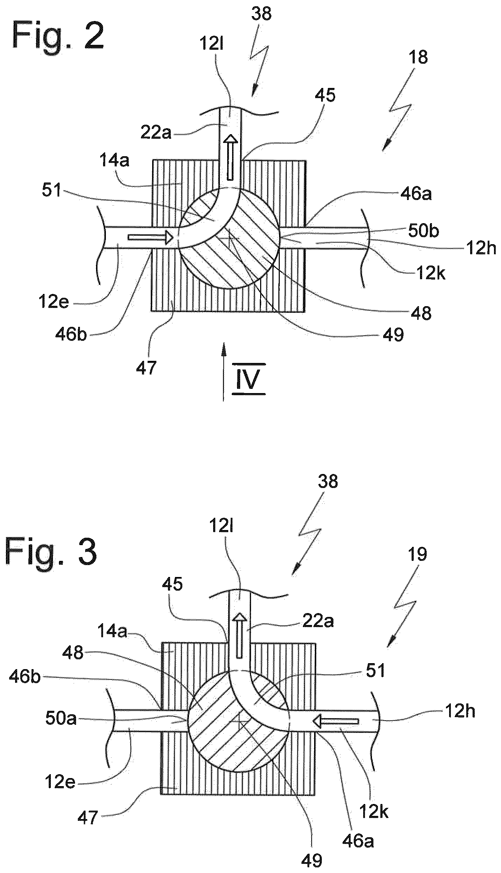

Während der erste Schaltzustand 18 in Figur 2 dargestellt ist, ist der zweite Schaltzustand 19 in Figur 3 dargestellt.

In dem zweiten Schaltzustand 19 ist die kommunikative Verbindung zwischen dem Fluidleitungsabschnitt 12e und dem Zielgerät 13a gesperrt. Stattdessen besteht in dem zweiten Schaltzustand 19 der Schalteinrichtung 14a eine kommunikative Verbindung zwischen dem Fluidleitungsabschnitt 12h bzw. dem Fluidleitungsabschnitt 12k und dem Zielgerät 13a.

Der Fluidleitungsabschnitt 12h bzw. 12k ist ausweislich Fig. 1 mit einem Wasser-Depot 66 verbunden. Zur Förderung des Wassers 58 aus dem Wasser-Depot 66 über die Fluidleitung 12h, 12k und insbesondere über den Fluidleitungsabschnitt 12l, hin zu dem Zielgerät 13a, ist eine insbesondere förderleistungsstarke Spülpumpe 16 vorgesehen. Die Spülpumpe 16 ist insbesondere mit der Unter-Steuerung 43c über die Signalverbindungsleitung 44m verbunden und von der Unter-Steuerung 43c ansprechbar.

Wie oben bereits dargestellt, kann die Spülpumpe 16 entweder mittelbar über die Unter-Steuerung 43c von der Steuerung 17 ansprechbar sein, oder unmittelbar von der Steuerung 17 ansprechbar sein.

Die Spülpumpe 16 ist gegenüber der Dosierpumpe 15 leistungsstärker ausgebildet und kann insbesondere höhere Pumpenleistungen und z.B. höhere Förderdrücke erzeugen.

Zwischen der Schalteinrichtung 14a und dem Zielgerät 13a weist der Fluidleitungsabschnitt 12l, der sogenannte zweite Leitungsabschnitt, eine Länge 24 auf.

Die Länge 24 kann mehr als 5 m oder mehr als 10 m, in bestimmten Situationen sogar mehr als 50 m, teilweise sogar bis zu 80 m betragen.

Nachdem die Dosierpumpe 15 das vorherbestimmte Volumen an Medium 11a zur Stelle 22a gefördert hat, das also nur einen verhältnismäßig kurzen Leitungsförderweg zurückgelegt hat, kann die Spülpumpe 16, nach Überführung der Schalteinrichtung 14a aus ihrem ersten Schaltzustand 18 in ihren zweiten Schaltzustand 19 die weitere Förderung des Mediums 11a bis zu dem weit entfernt angeordneten Zielgerät 13a übernehmen.

Neben großen Längen 24 der Fluidleitungen 12l, können z.B. auch große Höhendifferenzen durch die leistungsstarke Spülpumpe 16 überwunden werden.

Figur 1 zeigt die Schalteinrichtung 14a in ihrem ersten Schaltzustand 18 und die beiden übrigen Schalteinrichtungen 14b, 14c in ihrem zweiten Schaltzustand 19, in dem sie jeweils die kommunikative Verbindung zwischen dem Zielgerät 13b, 13c und dem zugehörigen Spülleitungsabschnitt 12j, 12i bzw. der Sammelspülleitung 12h freischalten. In dem zweiten Schaltzustand 19 kann eine Spülung zu den Zielgeräten 13b, 13c erfolgen.

Befindet sich eine der Schalteinrichtungen 14a, 14b, 14c in ihrer zweiten Schaltposition 19, ist die jeweilige kommunikative Verbindung zu dem stromaufwärts liegenden Leitungsabschnitt 12e, 12f, 12g, der zu der Mischverteilereinrichtung 25 hin führt, und auch die jeweilige kommunikative Verbindung zu der Dosierpumpe 15 fluiddicht gesperrt.

Die leistungsstärkere Spülpumpe 16, die z.B. auch einen hohen Druck generieren kann, ist also, wenn sich eine der Schalteinrichtungen 14a, 14b, 14c in ihrer zweiten Schaltposition 19 befindet, druckentkoppelt von der jeweiligen Eingangsseite dieser Schalteinrichtung 14a, 14b, 14c.

Dies verhindert insbesondere, dass Druck von der Ausgangsseite her auf den zweiten Teil 27 der Mischverteilereinrichtung 25 aufgebaut wird.

Die erfindungsgemäße Dosiereinrichtung 10 lässt bei einem Ausführungsbeispiel einen zeitgleichen oder parallelen Betrieb der Dosierpumpe 15 und der Spülpumpe 16 zu. Ein Parallelbetrieb ist insbesondere zugelassen, wenn sich beispielsweise eine der Schalteinrichtungen, z.B. die Schalteinrichtung 14a, in einer ersten Schaltposition befindet, und die übrigen Schalteinrichtungen, z.B. die Schalteinrichtungen 14b und 14c, sich in einer zweiten Schaltposition befinden. Dann kann durch Betrieb der Spülpumpe 16 durch die Schalteinrichtung 14b und 14c hindurch eine Zielspülung hin zu dem Zielgerät 13b und 13c durchgeführt werden, und gleichzeitig durch Betrieb der Dosierpumpe 15 eine Dosierung des Mediums 11a durch die erste Schalteinrichtung 14a hindurch zu dem Fluidleitungsabschnitt 12l hin vorgenommen werden.

Insbesondere können somit die Dosierpumpe 15 und die Spülpumpe 16 zeitgleich betrieben werden.

Dies ermöglicht gegenüber dem Stand der Technik eine erhebliche Zeitersparnis, da z.B. mehrere Zielgeräte 13a, 13b, 13c gleichzeitig beschickt werden können. So kann beispielsweise zu einem Zielgerät, z.B. zu dem Zielgerät 13a hin, eine Zielspülung erfolgen, während durch parallelen Betrieb der Dosierpumpe 15 in eine Richtung hin zu einem anderen Zielgerät, z.B. zu dem Zielgerät 13b, eine Mediendosierung erfolgt.

Angemerkt sei, dass die Spülpumpe 16 derartig förderleistungsstark ausgebildet sein kann, dass sie die Zielspülungen zu mehreren Zielgeräten 13a, 13b, 13c zeitgleich vornehmen kann.

Die Dosierpumpe 15 kann entsprechend ihren technischen Anforderungen optimiert ausgelegt werden und so ausgebildet sein, dass bei nur kleinen Förderleistungen sehr präzise kleine Volumina an Medium 11a, 11b, 11c dosiert werden.

Die Spülpumpe 16 hingegen kann entsprechend ihren unterschiedlichen technischen Anforderungen z.B. dazu ausgebildet sein, bei höheren Drücken insbesondere große Volumina an Spülmedium über lange Strecken schnell zu fördern.

Das Ausführungsbeispiel der Figur 1 zeigt drei Zielgeräte 13a, 13b, 13c und drei Schalteinrichtungen 14a, 14b, 14c. Die Zahl der Zielgeräte ist aber beliebig. Die Zahl der Schalteinrichtungen 14a, 14b, 14c entspricht vorzugsweise der Zahl der Zielgeräte 13a, 13b, 13c.

Figur 1 verdeutlicht, dass das Behältnis 20c als Wasser-Depot 66 ausgebildet ist und Wasser 58 enthält. Hierzu ist das Behältnis 20c über eine Rohrtrenneinrichtung 35 mit dem Hauswasseranschluss 37 verbunden. Zu der Rohrtrenneinrichtung 35 gehört ein Wasser-Ventil 42a, das über eine Steuerleitung 44v von einer Unter-Steuerung 43a ansprechbar ist. Die Unter-Steuerung 43a kann, muss aber nicht zwingend, über eine Signal- und Verbindungsleitung 44q mit der Steuerung 17 der Dosiereinrichtung verbunden sein.

Die Rohrtrenneinrichtung 35 umfasst einen ersten, unteren Niveaustandssensor 40 und einen zweiten oberen Niveaustandssensor 41.

Diese sind über Signalleitungen 44p, 44o mit der Unter-Steuerung 43a verbunden. Entscheidend ist, dass die Rohrtrenneinrichtung 35 eine Freifallstrecke umfasst, so dass der Hauswasseranschluss 37 nicht chemisch oder bakteriologisch kontaminiert werden kann.

Wenn am unteren Niveaustandssensor 40 festgestellt wird, dass der Vorrat an Wasser 58 in dem Behältnis 20c zur Neige geht, spricht die Unter-Steuerung 43a das Ventil 42a im Sinne einer Öffnung an und es wird solange Wasser nachgefüllt, bis der untere Niveaustandssensor 40 Wasser detektiert, das Depot 66 also wieder gefüllt ist.

Sodann steuert die Unter-Steuerung 43a das Ventil 42a im Schließsinne an. Das nun befüllte Depot 66 kann nachfolgend sukzessive geleert werden.

Die Funktionseinheit 57b kann bei Ausführungsbeispielen der Erfindung autark von der Dosiereinrichtung 10 ausgebildet sein und autark von dieser funktionieren. Vorzugsweise ist die Funktionseinheit 57b aber Bestandteil der Dosiereinrichtung 10 und/oder mit dieser verbunden.

Eine Entnahme von Wasser 58 aus dem Behältnis 20c durch die Dosiereinrichtung 10 erfolgt insbesondere über eine Sauglanze 39c. Wasser 58 wird als Spülmedium durch die Mischverteilereinrichtung 25 insbesondere jedes Mal nach Förderung eines Mediums 11a, 11b zur Spülung der Leitungswege bis zu der Stelle 22a stromabwärts der Schalteinrichtung 14a gefördert.

Figur 1 zeigt ein Ausführungsbeispiel, bei dem an die Dosiereinrichtung 10 zwei Behältnisse 20a, 20b mit unterschiedlichen Medien 11a, 11b angeschlossen sind. Von der Erfindung ist umfasst, wenn eine andere Zahl von Behältnissen 20a, 20b mit unterschiedlichen Medien 11a, 11b oder auch mit gleichen Medien angeschlossen ist.

Figur 1 verdeutlicht ein Ausführungsbeispiel, bei dem eine Spülung der Mischverteilereinrichtung 25b jedes Mal erfolgt, nachdem Medium gefördert worden ist. Insbesondere erfolgt eine Spülung der Mischverteilereinrichtung 25, und der Fluidleitungsabschnitte 34, 12e, 12f, 12g immer, bis zu der jeweiligen Stelle 22a, 22b, 22c stromabwärts der entsprechenden Schalteinrichtung 14aa, 14b, 14c, bevor die jeweilige Schalteinrichtung 14a, 14b, 14c aus ihrer ersten Schaltposition 18 in ihre zweite Schaltposition 19 verlagert wird.

Die Spülpumpe 16 ist ausweislich Figur 1 über den Fluidleitungsabschnitt 12h mit einem Wasser-Depot 66 verbunden, das eine eigene Rohrtrenneinrichtung 36 aufweist. Diese funktioniert gleichermaßen, wie die anhand des Ausführungsbeispiels der Figur 1 zuvor bereits erläuterte erste Rohrtrenneinrichtung 35.

Bei weiteren Ausführungsbeispielen kann die Spülpumpe 16 auch unmittelbar, ohne Zwischenschaltung einer Rohrtrenneinrichtung 36, mit einem Hauswasseranschluss 37 verbunden sein.

Anstelle einer Entnahme des Wassers 58 aus dem Depot 66, unter Zuhilfenahme einer Sauglanze, kann insbesondere vorgesehen sein, dass die Fluidleitung 12h über einen Anschluss 67 unmittelbar mit dem Depot 66 verbunden ist.

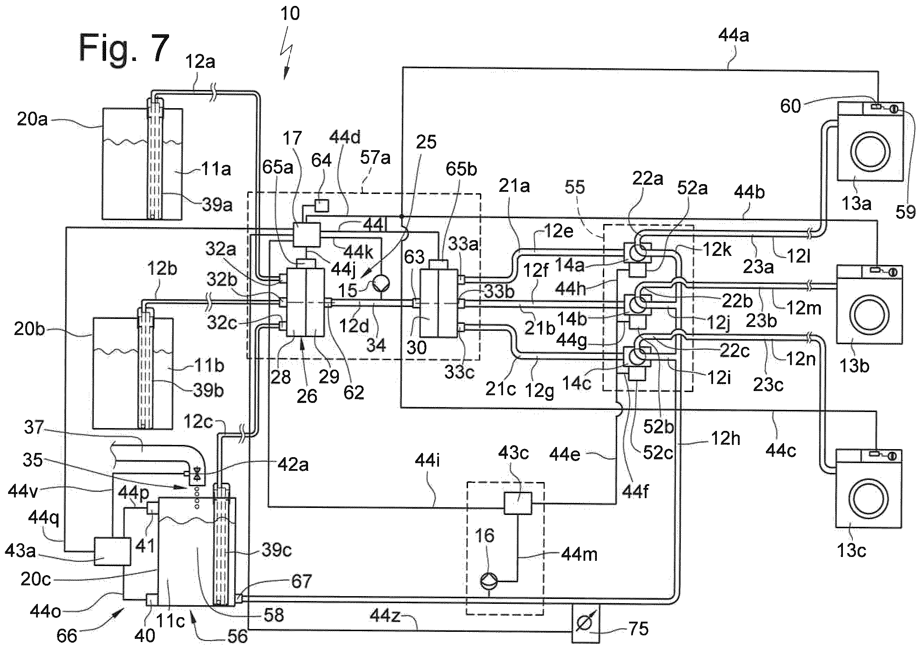

Bei einem alternativen Ausführungsbeispiel gemäß Figur 7 ist sowohl zur Versorgung der Dosierpumpe 15 mit Spülmedium, als auch zur Versorgung der Spülpumpe 16 mit Spülmedium nur ein einziges, gemeinsames Wasser-Depot 66 vorgesehen, das mit einer einzigen Rohrtrenneinrichtung 35 auskommt.

Bei dem Ausführungsbeispiel der Figur 1 sind drei Schalteinrichtungen 14a, 14b, 14c vorgesehen, die anhand des Ausführungsbeispiels der Figuren 2 bis 4 erläutert werden sollen. Figur 2 zeigt schematisch das Funktionsprinzip einer Schalteinrichtung 14a:
Die Schalteinrichtung 14a umfasst gemäß Figur 2 ein Gehäuse 47, das zur Aufnahme eines verlagerbaren Ventilkörpers 48 in Form einer Kugel ausgebildet ist.

Das Ventilgehäuse umfasst gemäß den Figuren 2 und 3 zwei Einlässe 46a, 46b und einen Auslass 45.

Der erste Einlass 46a ist mit dem Fluidleitungsabschnitt 12k und 12h verbunden und dient der Zuführung von Spülmedium. Er steht in kommunikativer Verbindung mit der Spülpumpe 16.

Der zweite Einlass 46b ist mit der Fluidleitung 12e verbunden und steht in kommunikativer Verbindung mit der Mischverteilereinrichtung 25.

Der Auslass 45 ist mit der Fluidleitung 12l verbunden und ermöglicht eine kommunikative Verbindung mit dem Zielgerät 13a.

Der Ventilköper ist insbesondere eine Kugel 48, die um eine Drehachse 49 drehbar ist. Bei dem Ausführungsbeispiel der Figuren 2 bis 4 weist der Ventilkörper 48 einen etwa rechtwinklig gebogenen Durchlasskanal 51 auf. Dieser verbindet in einer ersten Schaltposition 18 der Schalteinrichtung 14a, ausweislich Figur 2, den Einlass 46b mit dem Auslass 45. Zugleich sorgt eine Dichtfläche 50b an der Außenumfangsfläche des Ventilkörpers 48a dafür, dass der Einlass 46b gegenüber dem Auslass 45 und gegenüber dem anderen Einlass 46a abgedichtet ist.

In dieser ersten Schaltposition 18 kann eine Medienförderung, z.B. des Mediums 11a, durch die Schalteinrichtung 14a hindurch zu der Stelle 22a erfolgen, oder zu einer anderen Stelle, die weiter stromabwärts der ersten Schalteinrichtung 14a liegt.

Sobald die Medienförderung abgeschlossen ist, insbesondere nachdem eine Spülung des Mediums 11a durch die Mischverteilereinrichtung 25 hindurch vernommen worden ist, kann die Steuerung 17 der Dosiereinrichtung 10 unmittelbar oder mittelbar einen motorischen Antrieb 52a ansprechen und die Schalteinrichtung 14a in eine zweite Schaltposition 19 oder in einen zweiten Schaltzustand 19 gemäß Figur 3 verlagern. Im Zuge des Ansprechens des motorischen Antriebes 52a, kann der Ventilkörper 48, ausgehend von einer Position gemäß Figur 2, etwa um 90 Grad im Uhrzeigersinn verdreht werden, und eine Position gemäß Figur 3 einnehmen.

In Figur 3 weist die Schalteinrichtung 14a ihre zweite Schaltposition 19 auf.

Hier ist der Auslass 45 nunmehr mit dem Einlass 46a verbunden. Demgegenüber wird von der Dichtfläche 50a der Einlass 46b vollständig abgedichtet.

In dieser zweiten Schaltposition 19 des Ventilkörpers 48 kann von der Spülpumpe 16 Spülmedium, also Wasser, durch die erste Schalteinrichtung 14a hindurch gefördert werden. Diese Förderung erfolgt unter hohem Druck, wobei die Schalteinrichtung 14a insbesondere eine Druckdichtigkeit gegenüber dem Einlass 46b und damit gegenüber der an den Fluidleitungsabschnitt 12e angeschlossenen Mischverteilereinrichtung 25 gewährleistet.

Die Schalteinrichtung 14a gemäß den Figuren 2 bis 4 ist als sog. Kugelhahn-Anordnung 38 ausgebildet.

Ein Kugelhahn wird in der vorliegenden Patentanmeldung mit dem Bezugszeichen 38 bezeichnet.

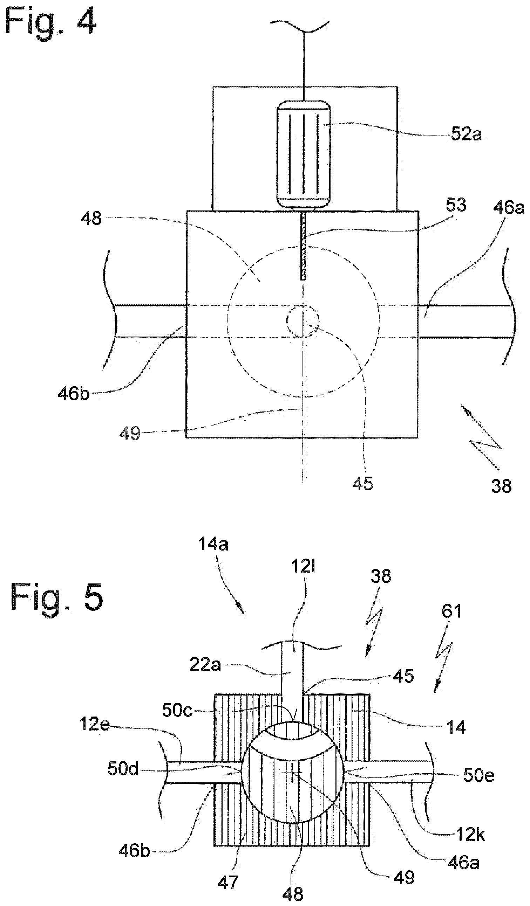

Eine typische Ausbildung eines Kugelhahns 38 zeigt Figur 4:
Hier erkennt man, dass ein elektromotorischer Antrieb 52a über eine Welle 53, die z.B. die Ausgangswelle des Elektromotors 52a bereitstellt, oder mit dieser verbunden ist, unmittelbar mit dem Ventilkörper 48 fest verbunden ist und die entsprechende Verlagerung des Ventilkörpers 48 durchführen kann.

Zwischen dem Antrieb 52a und der Welle 53 kann sich z.B. ein nicht dargestelltes Getriebe, z.B. ein Planetengetriebe, befinden, um die erforderlichen großen Drehmomente zur Verlagerung des Ventilkörpers 48 zu generieren.

Das Ausführungsbeispiel der Figur 5 zeigt die Schalteinrichtung 14a der Fig. 2, in einem dritten Schaltzustand 61.

Bei zahlreichen Ausführungsbeispielen der Erfindung kann es vorgesehen sein, dass eine Schalteinrichtung 14, 14a, 14b, 14c eine solche dritte Schaltposition 61 einnehmen kann, in der sämtliche Einlässe 46a, 46b gegeneinander und insbesondere auch gegenüber dem Auslass 45 abgedichtet sind. Hierzu kann die Kugel 48, oder ein anderer geeigneter dimensionierter Ventilkörper 48 mit geeigneten Dichtflächen 50c, 50d, 50e ausgestattet sein.

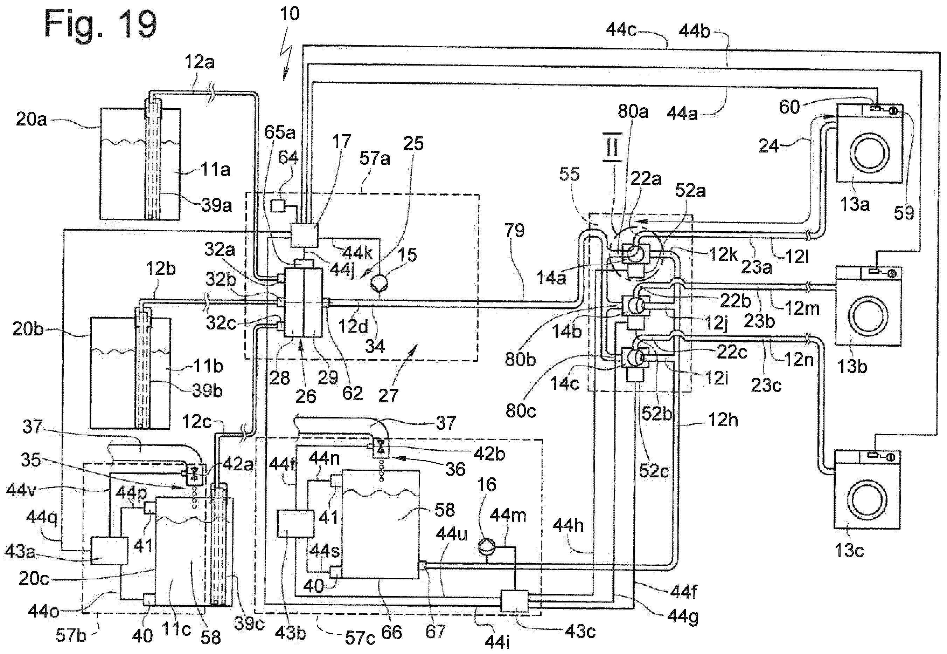

Insbesondere, wenn die Dosiereinrichtung 10 nicht über einen zweiten Teil 27 einer Mischverteileinrichtung 25 verfügt, wie dies weiter unten insbesondere anhand des Ausführungsbeispiels der Figur 19 erläutert wird, ist es förderlich, wenn jede der Schalteinrichtungen 14a, 14b, 14c eine dritte Schaltposition 61 einnehmen kann, in der sämtliche Einlässe 46a, 46b und auch der Auslass 45 gegeneinander fluiddicht, insbesondere druckfest, abgedichtet sind.

Im Regelfall funktioniert die Dosiereinrichtung 10 des Ausführungsbeispiels der Figur 1 wie folgt:
Nach Erhalt eines Medienanforderungskommandos von dem Zielgerät 13a spricht die Steuerung 17 der Dosiereinrichtung 10 die motorischen Antriebe 65a, 65b und 52a an und sorgt für eine Schaltung der Kommunikationswege von dem Behältnis 20a zum Zielgerät 13a. Sodann wird von der Dosierpumpe 15 die vorherbestimmte Menge an Medium 11a bis zur Stelle 22a gefördert. Die Steuerung 17 kann dann den Antrieb 65a und sodann nochmals die Dosierpumpe 15 ansprechen, um Spülmedium 58 durch die Mischverteilereinrichtung 25 hindurch bis zur Stelle 22a zu fördern und die Fluidleitungswege 12d bis 12e zu spülen.

Nachfolgend spricht die Steuerung 17 den Antrieb 52a an, und schaltet die Schalteinrichtung 14a in ihren zweiten Schaltzustand 19. Sodann kann die Steuerung 17 die Spülpumpe 16 ansprechen und eine Zielspülung, und somit eine Förderung des bereits an der Stelle 22a befindlichen Mediums 11a, entlang der langen Leitungswege 12l, bis zum Zielgerät 13a veranlassen.

Falls zu diesem Zeitpunkt die Steuerung 17 von einem anderen Zielgerät, z.B. von dem Zielgerät 13b eine Anforderung nach einer bestimmten Menge eines anderen Medium, z.B. Mediums 11b erhält, kann die Steuerung 17 die motorischen Antriebe 65a, 65b und 52b ansprechen und einen Kommunikationsweg, z.B. von dem Behältnis 20b zu dem Zielgerät 13b schalten. Dieser beinhaltet, dass die Schalteinrichtung 14b ihren ersten Schaltzustand 18 einnimmt. Der Kommunikationsweg zwischen dem Behältnis 20b und dem Zielgerät 13b ist in dieser ersten Schaltposition 18 der zweiten Schalteinrichtung 14b vollständig abgedichtet gegenüber der Spülpumpe 16.

Nachfolgend kann die Dosiereinrichtung 10 durch Ansprechen der Dosierpumpe 15 eine Förderung des Mediums 11b bis zur Stelle 22b, stromabwärts der Schalteinrichtung 14b veranlassen.

Während die Dosierpumpe 15 die Förderung des Mediums 11b hin in Richtung des Zielgerätes 13b zu der Stelle 22b vornimmt, kann die Spülpumpe 16 gleichzeitig eine Zielspülung des Mediums 11a zu dem Zielgerät 13a vornehmen. Damit kann eine Versorgung mehrerer Zielgeräte 13a, 13b, 13c mit unterschiedlichen Medien 11a, 11b äußerst effizient und schnell, und ohne Wartezeiten, durchgeführt werden. Zugleich können die beiden Pumpen 15, 16 optimiert ausgelegt werden, sodass eine präzise Dosierung bei langer Lebensdauer der Dosiereinrichtung 10 erreicht wird.

Bei dem Ausführungsbeispiel der Figur 1 sind die mehreren Schalteinrichtungen 14a, 14b, 14c zu einer Blockanordnung 55 zusammengefasst und/ oder kompakt angeordnet. Die mehreren Schalteinrichtungen 14a, 14b, 14c des Ausführungsbeispiels der Figur 1 können insbesondere konstruktiv zusammengefasst sein, was die Konstruktion und Bauweise erleichtert.

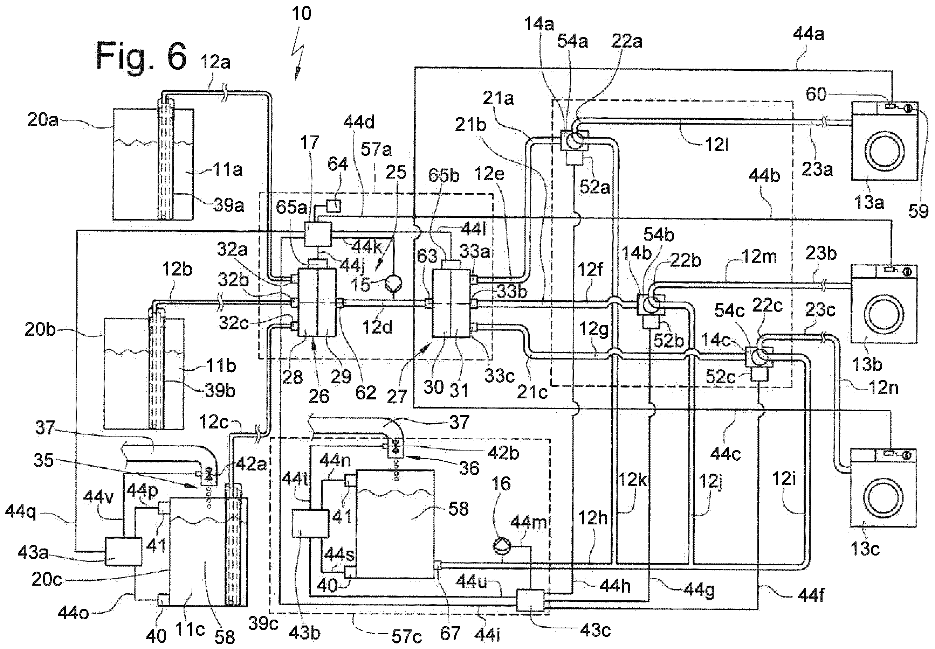

Bei dem Ausführungsbeispiel der Figur 6 sind die drei Schalteinrichtungen 14a, 14b, 14c vereinzelt angeordnet und können z.B. voneinander distanziert angeordnet sein. Hier kann auch vorgesehen sein, dass jede der drei Schalteinrichtungen 14a, 14b, 14c über eine eigene Signalleitung 44f, 44g, 44h ansprechbar ist. Das Ansprechen der drei Schalteinrichtungen 14a, 14b, 14c kann, wie in Fig. 6 gezeigt, über eine Unter-Steuerung 43c erfolgen, oder unmittelbar von der Steuerung 17 der Dosiereinrichtung 10.

Die vereinzelten Schalteinrichtungen 14a, 14b, 14c sind in Figur 6 mit dem Bezugszeichen 54a, 54b, 54c bezeichnet. Sie können voneinander distanziert angeordnet sein.

Bei dem Ausführungsbeispiel der Figur 7 sind die beiden Rohrtrenneinrichtungen 35, 36 des Ausführungsbeispiels der Figur 1 zu einem gemeinsamen Rohrtrenneinrichtung 56 zusammengefasst. Es ist ein gemeinsames Wasser-Depot 66 vorgesehen. Das Wasser-Depot 66 der Figur 7 dient zur Versorgung der Mischverteilereinrichtung 25 über eine Sauglanze 39c und auch zur Versorgung der Spülpumpe 16 über den Leitungsanschluss 67. Im Übrigen ist hier der konstruktive Aufbau nicht geändert.

Die merkmalsmäßige Besonderheit des Ausführungsbeispiels der Figur 7 kann auch bei jedem anderen Ausführungsbeispiel vorgesehen werden.

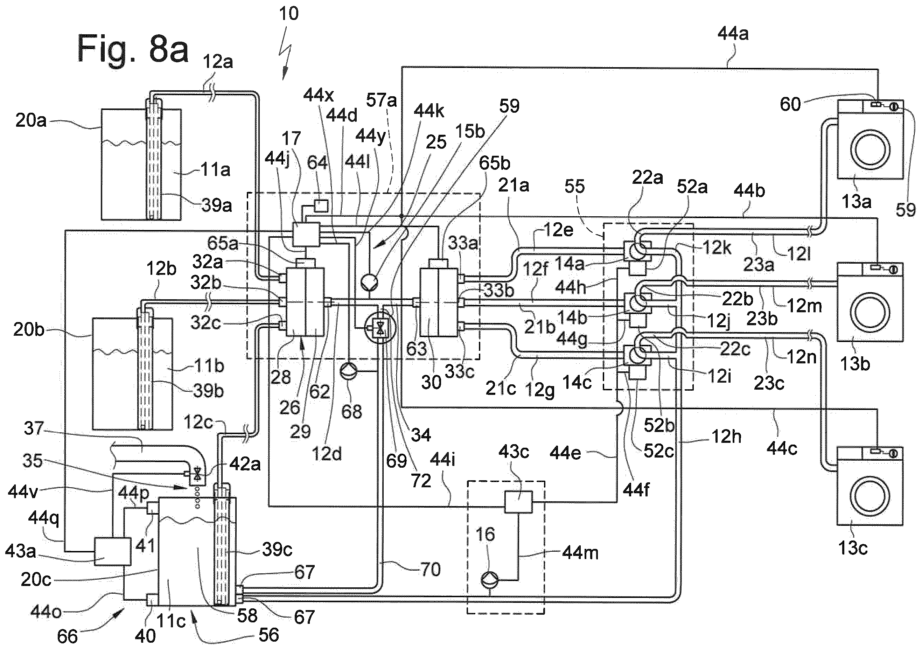

Das Ausführungsbeispiel der Figur 8a entspricht im Wesentlichen dem Ausführungsbeispiel der Figur 7 mit folgender Besonderheit:
Das Wasser-Depot 66 ist über eine Verdünnungsleitung 70, den sog. Verdünnungs-Bypass 70, mit dem Zwischenleitungsabschnitt 34 verbunden. Die Verdünnungsleitung 70 besitzt einen Anschluss 72 an die Zwischenleitung 34, der stromabwärts der Dosierpumpe 15 angeordnet ist.

Dem Verdünner-Bypass 70 ist eine Verdünnungspumpe 68 zugeordnet. Die Verdünnungspumpe 68 dient dazu, Spülmedium, nämlich Wasser, durch den Verdünnungs-Bypass 70 durch die Fluidleitungswege stromabwärts der Dosierpumpe 15 zu fördern, und diese Förderung vorzugsweise vorzunehmen, während die Dosierpumpe 15 das entsprechende Medium 11a, 11b fördert, oder kurz danach.

Dies zeigt sich erfindungsgemäß als vorteilhaft, wenn die Medien 11a, 11b bestimmte Chemikalien umfassen, die zum Zwecke der Förderung eine Verdünnung mit Wasser erfordern, da Sie z.B. ansonsten einer Gelbildung unterliegen können oder zu einer Propfen- oder Klumpenbildung neigen können.

Die Verdünnungspumpe 68 dient also zur zusätzlichen Zufuhr von Wasser, um eine Förderung des Mediums 11a, 11b - bei Verwendung bestimmter Medien - bis zur Stelle 22a, 22b zu erreichen.

Bei den Ausführungsbeispielen der Erfindung können die Dosierpumpe 15 und die Verdünnungspumpe 68 insbesondere parallel, also zeitgleich, betrieben werden.

Die Verdünnungspumpe 68 ist über eine Signal- und Steuerleitung 44x mit der Steuerung 17 verbunden und von dieser ansprechbar.

Der Verdünner-Bypass 70, ist insbesondere über ein Ventil 69 öffenbar bzw. schließbar. Das Ventil 69 kann über eine Steuerleitung 44y mit der Steuerung 17 verbunden sein und von dieser angesprochen werden.

Die Steuerung 17 der Dosiereinrichtung 10 kann bei Erhalt von Anforderungskommandos für solche Medien, die eine zusätzliche Verdünnung erfordern, das Ventil 69 über die Leitung 44y bei Bedarf ansprechen und bei einer Dosierung dieses Mediums öffnen und zugleich die Verdünnungspumpe 68 ansprechen, so dass das entsprechende Medium bereits verdünnt bis zur Stelle 22a, stromabwärts der entsprechenden Schalteinrichtung 14a, gelangt.

Bei einem weiteren Ausführungsbeispiel der Erfindung ist ein schaltbares oder von der Steuerung 17 ansprechbares Ventil 69 nicht erforderlich oder nicht vorgesehen.

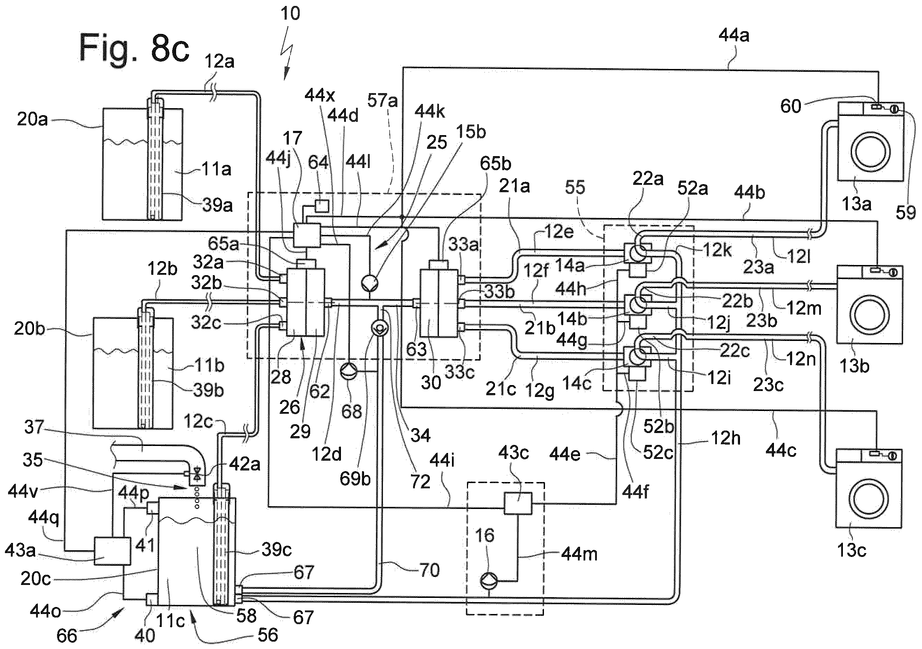

Ein solches Ausführungsbeispiel der Erfindung ist in Fig. 8c dargestellt. Hier ist anstelle eines elektrisch schaltbaren Ventils ein Rückschlagventil 69b, also insbesondere ein passives Ventil, vorgesehen. Dieses verhindert insbesondere, dass bei einer Förderung von Medien durch die Dosierpumpe 15b Medium ungewünscht in den Verdünner-Bypass 70 gelangen kann.

Das Rückschlagventil 69b ist passiv ausgebildet und ermöglicht bei Betrieb der Verdünnungspumpe 68 eine Förderung von Wasser durch den Verdünner-Bypass 70, verhindert aber bei ausgeschalteter - sowie ggf. auch bei eingeschalteter - Verdünnungspumpe 68 eine unbeabsichtigte Förderung von Medium durch die Dosierpumpe 15b in den Verdünner-Bypass 70 hinein.

Das Rückschlagventil 69b kann beispielsweise eine Schaltkugel umfassen, die in einem Ventilsitz aufgenommen werden kann.

Bei Fluidströmungen im Fördersinn der Verdünnungspumpe 68, also bezogen auf Figur 8c, nach oben, wird die Schaltkugel von ihrem Ventilsitz abgehoben. Bei einer Fluidströmung in Gegenrichtung erreicht sie den Ventilsitz und sperrt den Fluidstrom.

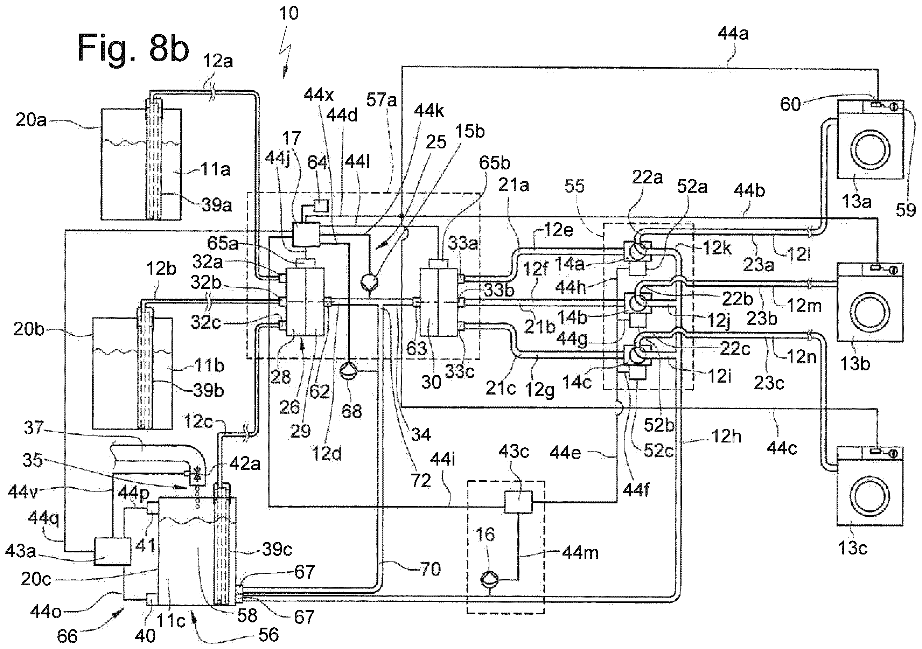

Ein weiteres Ausführungsbeispiel zeigt Fig. 8b. Hier ist weder ein elektrisch schaltbares Ventil 69, noch ein passives Rückschlagventil 69b vorgesehen. Stattdessen ist bei diesem Ausführungsbeispiel die Verdünnungspumpe 68 druckdicht ausgebildet. Auch hier wird verhindert, dass von der Dosierpumpe 15b gefördertes Medium in den Verdünner-Bypass 70 hinein gelangt.

Der Vorteil der Ausführungsbeispiele der Figuren 8a, 8b, 8c, die jeweils eine gesonderte Verdünnungspumpe 68 aufweisen, liegt insbesondere darin, dass die Verdünnungsrate eingestellt werden kann, insbesondere indem die Verdünnungspumpe 68 in ihrer Förderleistung eingestellt wird. Die Verdünnungspumpe 68 weist bei diesen Ausführungsbeispielen der Figuren 8a, 8b, 8c also eine einstellbare Förderleistung auf. Die Förderleistung kann zur Erzielung eines gewünschten Verdünnungsverhältnisses angepasst werden.

Auch die Besonderheiten des Ausführungsbeispiels der Figur 8a können bei jedem anderen Ausführungsbeispiel der Erfindung vorgesehen sein.

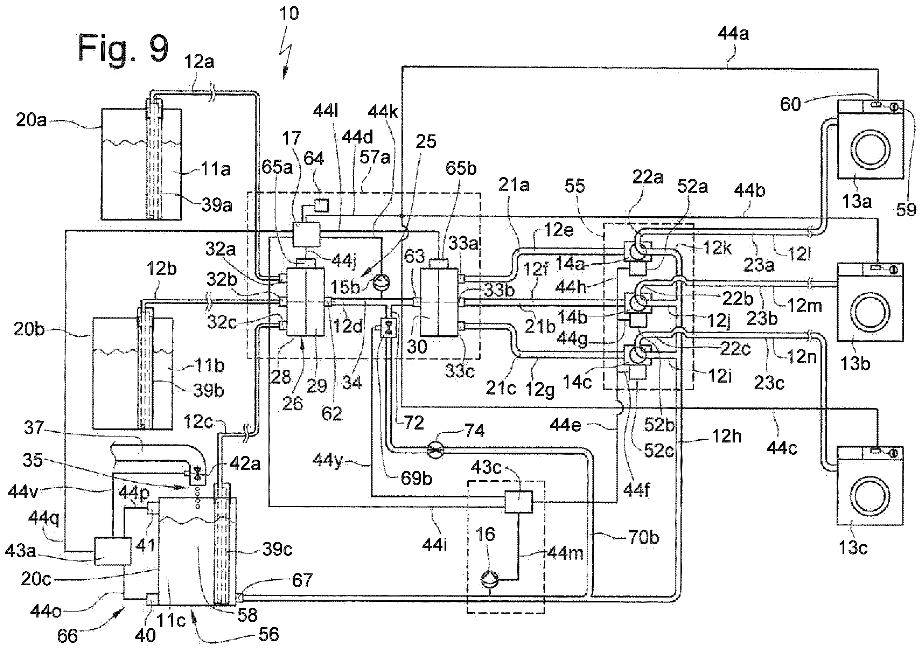

Ein weiteres Ausführungsbeispiel zeigt Figur 9:
Hier geht von dem Fluidleitungsabschnitt 12h stromabwärts der Spülpumpe 16, ein Verdünnungs-Bypass 70b ab, der ebenfalls über einen Anschluss 72 stromabwärts der Dosierpumpe 15b an den Leitungsabschnitt 34 ansetzt.

Die Dosierpumpe 15b kann bei diesem Ausführungsbeispiel druckfest ausgebildet sein.

Wiederum ist ein über eine Steuerleitung 44y von der Unter-Steuerung 43a oder von der Steuerung 17 ansprechbares Ventil 69b vorgesehen.

Auch hier kann für den Fall, dass ein Medium 11a, 11b eine Verdünnung erfordert, eine Zuspülung von Wasser 58 zu einem frühestmöglichen Zeitpunkt erfolgen.

Dabei kann auf eine zusätzliche dritte Pumpe, insbesondere auf die Verdünnungspumpe 68 der Ausführungsbeispiele der Figuren 8a bis 8c, verzichtet werden.

Hier kann die Spülpumpe 16 dazu verwendet werden, für die gewünschte Zuspülung von Wasser während der Mediendosierung zu sorgen.

Für den Fall, dass die Dosiereinrichtung 10 von einem Zielgerät 13 ein Anforderungskommando für ein Medium 11a, 11b erhält, das eine Verdünnung erfordert, kann während, oder nach der Dosierung die Steuerung 17 das Ventil 69b ansprechen, die Verbindungsleitung 70b öffnen, gegebenenfalls die Spülpumpe 16 ansprechen und antreiben, oder die bereits angetriebene Spülpumpe 16 nutzen, um Wasser in den Zwischenleitungsabschnitt 34 hin zu fördern, um das Medium 11a, 11b zu verdünnen und mit einer größeren Wassermenge zu der Stelle 22a, 22b, 22c stromabwärts der Schalteinrichtung 14a, 14b, 14c zu fördern.

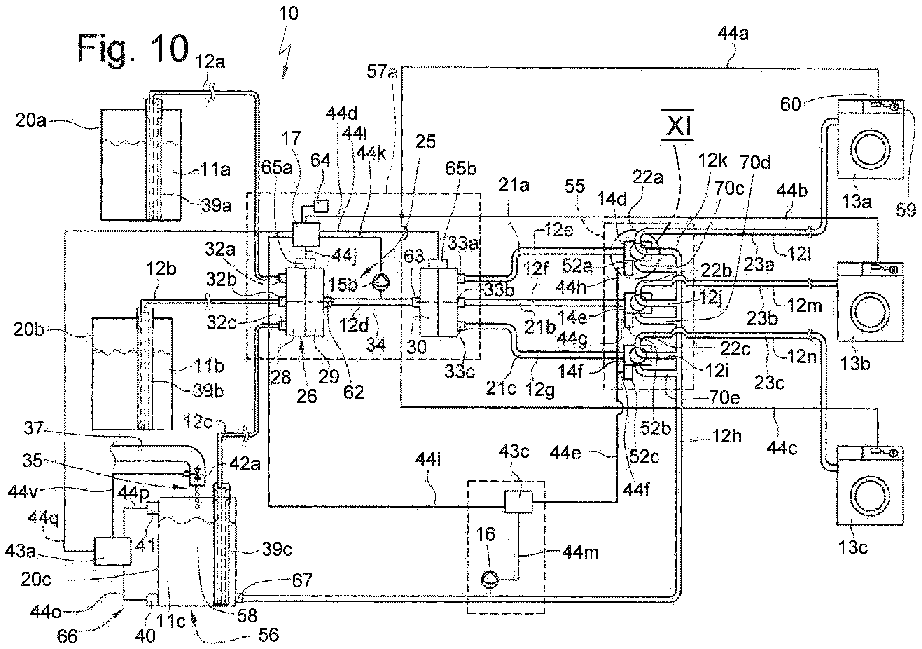

Ein weiteres Ausführungsbeispiel zeigt Figur 10:
Hier sind die Schalteinrichtungen 14d, 14e, 14f nicht, wie bei dem Ausführungsbeispiel der Figur 7 vorgesehen, als Drei-Wege-Ventil, sondern als Vier-Wege-Ventil ausgestaltet.

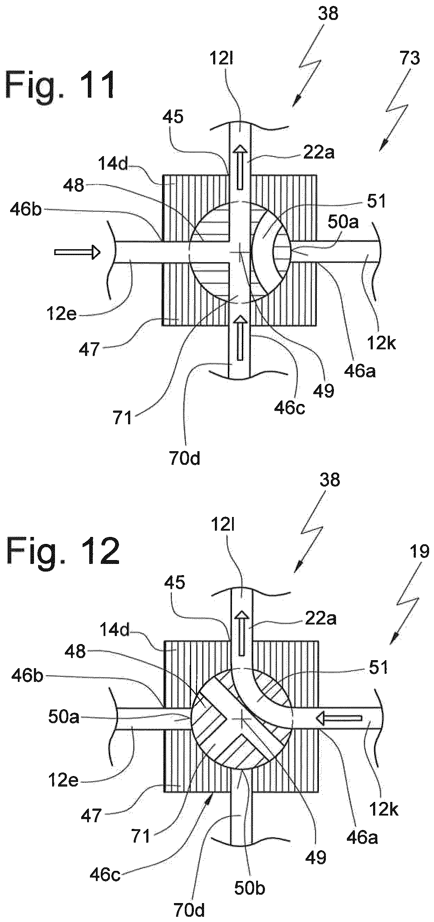

Dies wird später noch anhand Figur 11 erläutert.

Bei dem Ausführungsbeispiel der Figur 10 kann während der Dosierung von Medium 11a, 11b durch die Dosierpumpe 15b bei einer entsprechenden Schaltposition der Schalteinrichtung 14d, 14e gemäß Fig. 11 zeitgleich zur Medienförderung eine Verdünnung mit Wasser unter Zuhilfenahme der Spülpumpe 16 bewirkt werden.

Figur 11 erläutert, dass das Vier-Wege-Ventil, beispielsweise wiederum eine Kugelhahn-Anordnung 38, über einen Durchlasskanal 71 verfügt. Dieser kann z.B. T-förmig oder Y-förmig ausgebildet sein und in der Schaltposition gemäß Figur 11 zwei Einlässe 46c, 46b und einen Auslass 45 zugleich miteinander verbinden.

Wie Figur 10 zeigt, gehen von dem Fluidleitungsabschnitt 12h jeweils unmittelbar stromaufwärts der drei Schalteinrichtungen 14d, 14e, 14f Verdünnungs-Bypässe 70c, 70d, 70e ab, die, wie Figur 11 und 12 erläutern, einem dritten Eingang 46c der jeweiligen Schalteinrichtung 14d, 14e, 14f zugeführt werden.

Die Schalteinrichtung 14d kann eine Schaltposition, wie in Figur 11 gezeigt, annehmen, in der Abschnitt 12e, entlang dem Medium gefördert wird, unmittelbar mit dem Fluidabschnitt 12l stromabwärts der Schalteinrichtung 14d kommunikativ verbunden ist, und zugleich der Verdünnungs-Bypass 70d, aufgrund der T-förmigen Ausgestaltung des Durchlasskanals 71 ebenfalls kommunikativ mit dem Fluidabschnitt 12l stromabwärts der Schalteinrichtung 14d verbunden ist.

Die Schalteinrichtung 14d kann, wie Figur 12 zeigt, in einer geänderten Schaltposition 19 gemäß Figur 12, über die Dichtflächen 50a, 50b den Einlass 46b und den Einlass 46c sperren und nur den Einlass 46a mit dem Auslass 45 kommunikativ verbinden.

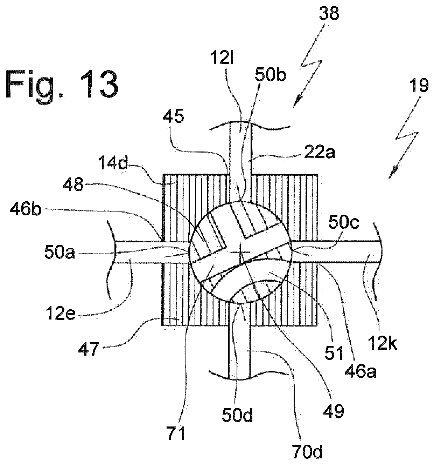

Fig. 13 zeigt einen Schaltzustand, in dem alle Eingänge 46a, 46b, 46c und der Auslass 45 voneinander abgedichtet sind.

Die Schalteinrichtung 14d des Ausführungsbeispiels der Figuren 10 bis 12 gewährleistet jedenfalls - unabhängig davon, wie die Schalteinrichtung konkret ausgestaltet ist, dass in einer ersten Schaltposition eine kommunikative Verbindung zwischen der Dosierpumpe 15b und dem Zielgerät 13a hergestellt ist, in einer zweiten Position eine kommunikative Verbindung zwischen der Spülpumpe 16 und dem Zielgerät 13a hergestellt ist, und in einer weiteren Schaltposition eine kommunikative Verbindung zwischen der Dosierpumpe 15b, der Spülpumpe 16 und dem Zielgerät 13a hergestellt ist, um Medien 11a, 11b, die eine Verdünnung erfordern, zu verdünnen.

Der Schaltzustand, in dem die Schalteinrichtung 14d eine kommunikative Verbindung zwischen der Dosierpumpe 15b, der Spülpumpe 16 und dem entsprechenden Zielgerät 13a herstellt, wie der Schaltzustand, der beispielsweise in Figur 11 dargestellt ist, wird auch als vierter Schaltzustand 73 bezeichnet.

Bei einer vorteilhaften Ausgestaltung der Erfindung ist die Dosierpumpe 15b vorteilhaft druckdicht ausgebildet, und hält dem von der Spülpumpe 16 generierten Druck in der Verdünnungsleitung 70, 70b, 70c, 70d, 70e stand.

Die Ausführungsbeispiele der Figuren 9 bis 13 offenbaren jeweils einen Verdünnungs-Bypass 70b, 70c, 70d, 70e, der nach Art einer Verdünnungszuführleitung unmittelbar von der Spülpumpe 16 mit Spülmedium beaufschlagt wird.

Von Erfindung ist auch umfasst, wenn einem Verdünnungs-Bypass eine Einrichtung zur Durchfluss-Begrenzung zugeordnet ist. Es können also, strömungstechnisch ausgedrückt, Drosseln vorgesehen sein. Eine Drossel kann z.B. ein Druckminderer und/ oder ein Flussminderer sein.

Optional ist in Figur 9 in der Verdünnungszuführleitung 70b eine Einrichtung 74 zur Begrenzung des Durchflusses, also eine Drossel, angedeutet. Eine solche Drossel kann z.B. auch stromaufwärts jeder der drei Schalteinrichtungen 14d, 14e, 14f, des Ausführungsbeispiels der Figur 10, im Bereich der Verdünnungs-Bypässe 70c, 70d, 70e angeordnet sein.

Von der Erfindung ist darüber hinaus umfasst, wenn stromabwärts der Spülpumpe 16 - wie in dem Ausführungsbeispiel der Figur 7 optional dargestellt - eine Messeinrichtung 75 angeordnet ist, die als Flowmeter oder Durchflussmessgerät ausgebildet ist. Die Messeinrichtung 75 kann z.B. feststellen, ob nach dem Ansprechen der Spülpumpe 16 auch tatsächlich Spülmedium gefördert worden ist und/ oder ob ein Fehler vorliegt. Die Messeinrichtung 75 kann über eine Signal- und Verbindungsleitung 44z mit der Steuerung 17 der Dosiereinrichtung 10 verbunden sein.

Für den Fall, dass es infolge eines Ansprechens der Spülpumpe 16 nicht zu dem erwarteten Messsignal an der Messeinrichtung 75 kommt, kann die Dosiereinrichtung 10 einen Alarm generieren und z.B. einer Bedienperson visuell oder akustisch oder automatisiert anzeigen, dass eine Spülmedien-Förderung nicht ordnungsgemäß erfolgt ist.

Dies kann beispielsweise eintreten, wenn die Spülung nicht funktioniert hat oder beispielsweise auch eine Leitung verstopft ist.

Selbstverständlich kann eine Drossel 74 und/ oder eine Messeinrichtung 75 bei jedem der Ausführungsbeispiele vorgesehen werden.

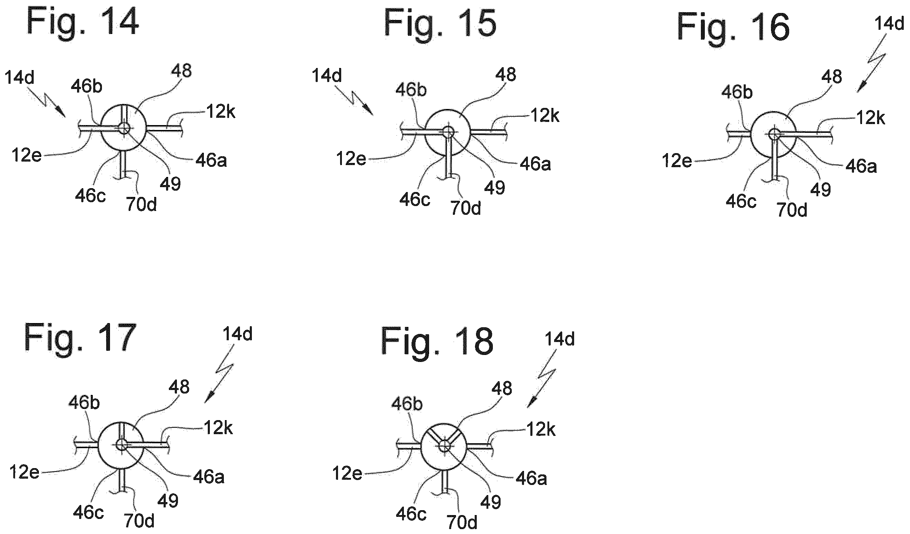

Anhand der Ausführungsbeispiele der Figuren 14 bis 18 wird nun noch ein weiteres Ausführungsbeispiel einer Schalteinrichtung 14d erläutert, das als Vier-Wege-Ventil oder Mehrweg-Ventil, insbesondere nach Art eines Kugelhahns ausgebildet ist, und ähnliche Funktionalitäten wie das Ausführungsbeispiel der Figuren 11 bis 13 bietet, aber eine andere Konstruktion aufweist:
Figur 14 zeigt schematisch nur den Ventilkörper 48 in Form einer um seine Schwenkachse 49 schwenkbaren Kugel. In den kugelförmigen Ventilkörper 48 sind drei zueinander senkrecht stehende Kanalabschnitte 76a, 76b eingearbeitet, von denen nur zwei Kanalabschnitte, nämlich die Kanalabschnitte 76a, 76b, in den Figuren 14 bis 18 dargestellt sind. Der dritte, nicht dargestellte Kanalabschnitt erstreckt sich von dem Zusammenflussbereich oder Mittenbereich, in dem die beiden Kanalabschnitte 76a, 76b zusammentreffen, senkrecht zur Papierebene in Blickrichtung des Betrachters bis zu dem nicht dargestellten Ausgang.

Der von einer Kugel gebildete Ventilkörper ist in einem in den Figuren 14 bis 18 nicht dargestellten Kugelgehäuse, ähnlich dem Kugelgehäuse der Figuren 11 bis 13, angeordnet. Der motorische Antrieb ist in den Figuren 14 bis 18 nicht dargestellt.

In der Schaltposition gemäß Figur 14 verbindet der Ventilkörper 48 den Eingang 46b, zugleich also den Fluidleitungsabschnitt 12b, mit dem nicht dargestellten Ausgang. Hier wird nur Medium durch die Schalteinrichtung 14d hin durchgelassen, das von der Dosierpumpe gefördert wird.

Die übrigen Eingänge 46a, 46c sind abgedichtet.

In der Ventilstellung gemäß Figur 15, die ausgehend von Figur 14 einer Ventildrehung um die Schwenkachse 49, etwa um 90° entgegen dem Uhrzeigersinn bedarf, sind die beiden Eingänge 46b, 46c mit dem nicht dargestellten Ausgang verbunden. Hier wird Medium und zugleich Verdünnungs-Medium, insbesondere mit einem reduzierten Durchfluss, zum Ausgang gefördert.

Der Eingang für das Spülmittel 46a, der unmittelbar zur Spülpumpe 16 führt, ist hier gesperrt.

Figur 16 zeigt eine, in einem weiteren Schaltzustand befindliche Schalteinrichtung 14d, die eine weitere Drehung des Ventilkörpers 48 um 90° entgegen dem Uhrzeigersinn, ausgehend von der Position gemäß Figur 15, erfordert.

Hier sind der Eingang 46a und der Eingang 46c zu dem nicht dargestellten Ausgang durchgeschaltet. Es wird also sowohl unmittelbar von dem Fluidleitungsabschnitt 12k Spülmedium von der Spülpumpe 16 bereitgestellt, als auch über den Verdünnungs-Bypass 70d Spülmittel zugeführt.

Der Medieneingang 46b ist abgedichtet.

Ausgehend von Figur 16 kann der Ventilkörper um weitere 90° entgegen dem Uhrzeigersinn um die Schwenkachse 49 verschwenkt werden, sodass die Schaltposition gemäß Figur 17 erreicht wird.

Hier ist nur der Eingang 46a zu dem nicht dargestellten Ausgang durchgeschaltet. In dieser Schaltposition wird eine kommunikative Verbindung zwischen dem Zielgerät 13 und der Spülpumpe 16 bereitgestellt.

Figur 18 zeigt einen weiteren, fünften Schaltzustand, der ausgehend von der Ventilstellung gemäß Figur 17, eine weitere Verdrehung des Ventilkörpers 48 um etwa 45° entgegen dem Uhrzeigersinn um die Schwenkachse 49 erfordert:
Hier sind sämtliche drei Eingänge 46a, 46b und 46c voneinander abgedichtet.

Ein weiteres Ausführungsbeispiel einer erfindungsgemäßen Dosiereinrichtung 10 ist in Figur 19 dargestellt.

Dieses Ausführungsbeispiel entspricht im Wesentlichen dem Ausführungsbeispiel der Figur 1.

Hier ist im Unterschied zu dem Ausführungsbeispiel der Fig. 1 der zweite Teil 27 der Mischverteilereinrichtung 25 des Ausführungsbeispiels der Figur 1 entfallen. Stattdessen ist die Förderleitung 79 zwischen der Dosierpumpe 15 und den Schalteinrichtungen 14a, 14b, 14c geändert ausgestaltet. Die Förderleitung 79 ist im Bereich der Schalteinrichtung 14a, 14b, 14c flötenartig ausgebildet und umfasst nur kurzgehaltene Förderleitungsabschnitte 80a, 80b, 80c, nach Art von Abzweigen, die von der verteilerartigen Leitung 79 abgehen.

Figur 19 zeigt einen Schaltzustand der ersten Schalteinrichtung 14a, in dem die Dosierpumpe 15 mit dem Zielgerät 13a verbunden ist. Die beiden anderen Schalteinrichtungen 14b, 14c befinden sich gemäß Figur 19 jeweils in ihrem dritten Schaltzustand 61, in dem jegliche Anschlüsse der entsprechenden Schalteinrichtung 14b, 14c gegeneinander fluiddicht und druckfest gesperrt sind.

Nachdem eine Förderung von Medium von der Dosierpumpe 15 durch die erste Schalteinrichtung 14a hindurch veranlasst worden ist, kann die Steuerung 17, 43c die Schalteinrichtung 14a ansprechen und in einen geänderten, in Fig. 19 nicht dargestellten Schaltzustand überführen, in dem die Spülpumpe 16 mit dem Zielgerät 13a verbunden ist.

Nachfolgend kann von der Spülpumpe 16 eine Zielspülung zu dem Zielgerät 13a durch die erste Schalteinrichtung 14a hindurchgeführt werden, wobei infolge der fluiddicht von den beiden Schalteinrichtungen 14b und 14c abgesperrten Kommunikationswege sichergestellt ist, dass kein Leitungsdruck die Dosierpumpe 15 oder eines der nicht von einer Zielspülung zu erreichenden Zielgeräte 13b und 13c beaufschlagt.

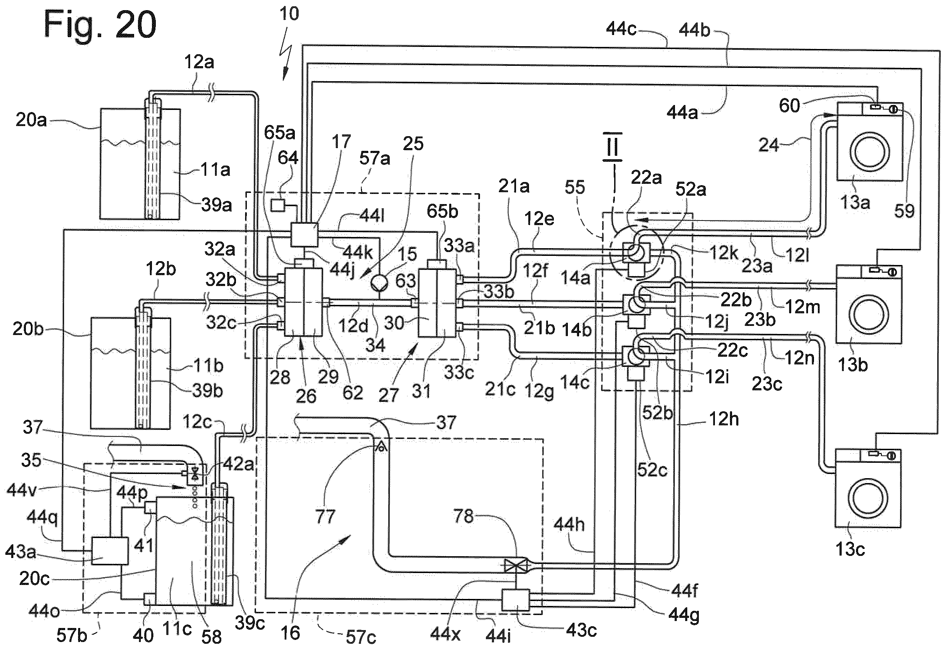

Das Ausführungsbeispiel der Fig. 20 entspricht dem Ausführungsbeispiel der Fig. 1 mit folgendem Unterschied: Gemäß Fig. 20 ist anstelle einer Spülpumpe 16 eine Spüleinrichtung 90 vorgesehen, die ohne einen eigenen Pumpenantrieb auskommt. Stattdessen wird zur Förderung des Spülmediums und zum Pumpen des Spülmediums zu dem Zielgerät der im Hauswassernetz 89 befindliche Leitungsdruck genutzt.

Die Unter-Steuerung 43c kann z.B. über eine Signalleitung 44x ein Ventil 78 ansprechen, insbesondere öffnen oder schließen. Ein solches Ventil 78 kann auch manuell öffenbar oder schließbar ausgebildet sein.

Insbesondere umfasst die Spüleinrichtung 90 bei dem Ausführungsbeispiel der Figur 20 eine Rohrtrenneinrichtung 77, die ohne eine Freifallstrecke auskommt, und die insbesondere in der Lage ist, den Leitungsdruck, der im Hauswassernetz 89 herrscht, auf die nachgeschalteten Abschnitte 12h der Fluidleitungswege zu übertragen. Beispielsweise kann die Rohrtrenneinrichtung 77 auch ein Rückschlagventil umfassen, das für eine chemische und bakteriologische Rohrtrennung sorgt. Ein solches Rückschlagventil kann beispielsweise eine in Figur 20 lediglich angedeutete Ventilkugel 88 und einen Ventilsitz 87 umfassen.

Durch eine von der Untersteuerung 43c veranlasste Öffnung des Ventils 78 kann Spülmedium unmittelbar vom Hauswassernetz 89 durch die Förderleitung 12h gepumpt und gefördert werden. Unter Zuhilfenahme des Leitungsdruckes des Hauswassernetzes 89 kann das Spülmedium über die jeweilige Schalteinrichtung 14a, 14b, 14c, soweit diese einen entsprechenden Schaltzustand einnimmt, zu dem jeweiligen Zielgerät 13a, 13b, 13c gefördert werden.

Figur 21 zeigt ein weiteres Ausführungsbeispiel einer erfindungsgemäßen Dosiereinrichtung 10, welches ebenfalls ohne eine Spülpumpe auskommt, aber stattdessen eine Spüleinrichtung 90 aufweist. Wiederum ist eine Anbindung der Eingangsseite der Schalteinrichtungen 14a, 14b, 14c ohne Zwischenschaltung einer eigenen Spülpumpe 16 unmittelbar an das Hauswassernetz 89 vorgenommen. Auch hier wird der Leitungsdruck im Hauswassernetz 89 zur Förderung des Mediums zu den Zielgeräten verwendet.

Wiederum kann eine Rohrtrenneinrichtung 77 vorgesehen sein, die den Leitungsdruck durchschaltet.

Gegenüber dem Ausführungsbeispiel der Figur 20 besteht der Unterschied, dass das von der Untersteuerung 43c ansprechbare Ventil 78 entfallen ist. Hier steht der Leitungswasserdruck des Hauswassernetzes 89 unmittelbar an den Eingängen der Schalteinrichtungen 14a, 14b, 14c an.

Das Ausführungsbeispiel der Figur 22 verdeutlicht, dass auch eine bei dem Ausführungsbeispiel der Fig. 8a vorgesehene Verdünnungspumpe 68 durch eine Verdünnungseinrichtung 91 ersetzt werden kann.

Die Verdünnungseinrichtung 91 umfasst eine Fluidleitung 92, die ebenfalls unmittelbar an das Hauswassernetz 89 angeschlossen ist. Die Verdünnungseinrichtung 91 nutzt den im Hauswassernetz 89 befindlichen Leitungsdruck zur Förderung von Spülmedium zum Zwecke der Verdünnung und führt Spülmedium einem Leitungsbereich unmittelbar stromabwärts der Dosierpumpe 15 zu.

Auf eine gesonderte Verdünnungspumpe 68, die bei dem Ausführungsbeispiel der Figur 8a vorgesehen ist, kann bei diesem Ausführungsbeispiel verzichtet werden.

Im Übrigen wird auf Folgendes hingewiesen: Bei sämtlichen Ausführungsbeispielen der Erfindung kann der zweite Teil 27 der Mischverteileinrichtung 25 entfallen, so wie dies anhand des Ausführungsbeispiels der Figur 19 beschrieben ist.

Bei sämtlichen Ausführungsbeispielen der Erfindung kann eine Spülpumpe 16 durch eine Spüleinrichtung 90 ersetzt werden, wie dies z.B. in den Figuren 20 bis 23 dargestellt ist.

Bei sämtlichen Ausführungsbeispielen der Erfindung kann eine Verdünnungspumpe 68 durch eine Verdünnungseinrichtung 91 ersetzt werden, die unmittelbar mit dem Hauswassernetz 89 verbunden ist und die den im Hauswassernetz 89 befindlichen Leitungsdruck zur Förderung des Spülmediums zum Zwecke der Verdünnung von eine Verdünnung erfordernden Medien nutzt, wie dies beim Ausführungsbeispiel der Figur 22 dargestellt ist.

## Patentansprüche

1. Dosiereinrichtung (10) zur Dosierung und Zuführung von Medien (11a, 11b) über Fluidleitungen (12a, 12b, 12c, 34, 12e, 12f, 12g, 12l, 12m, 12n) zu wenigstens einem Zielgerät (13a, 13b, 13c), insbesondere zu einer gewerblichen textilen Waschmaschine, wobei die Dosiereinrichtung eine Schalteinrichtung (14a, 14b, 14c) aufweist, die eingangsseitig mit einer Dosierpumpe (15) und mit einer Spülpumpe (16) oder mit einer Spüleinrichtung (90) und die ausgangsseitig mit einem Zielgerät (13a, 13b, 13c) verbunden ist, und die von einer Steuerung (17) der Dosiereinrichtung (10) zur Änderung ihres Schaltzustandes ansprechbar ist, wobei die Schalteinrichtung (14a, 14b, 14c) in einem ersten Schaltzustand (18) eine kommunikative Verbindung zwischen der Dosierpumpe (15) und dem Zielgerät (13a, 13b, 13c) bereitstellt und in einem zweiten Schaltzustand (19) eine kommunikative Verbindung zwischen der Spülpumpe (16) oder der Spüleinrichtung (90) und dem Zielgerät (13a, 13b, 13c) bereitstellt.

2. Dosiereinrichtung (10) nach Anspruch 1, **dadurch gekennzeichnet, dass** von der Dosiereinrichtung (10) zur Durchführung eines Dosierprozesses unter Zuhilfenahme der Dosierpumpe (15) eine Entnahme eines bestimmten Volumens an Medium (11a, 11b) aus einem Behältnis (20a, 20b, 20c) und eine Förderung dieses Volumens entlang eines ersten Fluidleitungsabschnittes (21) in Richtung zu dem Zielgerät (13a, 13b, 13c) bis zu einer Stelle (22a, 22b, 22c) stromabwärts der Schalteinrichtung (14a, 14b, 14c) durchführbar ist.

3. Dosiereinrichtung (10) nach Anspruch 2, **dadurch gekennzeichnet, dass** die Dosierpumpe (15) von der Steuerung (17) zur Durchführung des Dosierprozesses ansprechbar ist.

4. Dosiereinrichtung (10) nach Anspruch 2 oder 3, **dadurch gekennzeichnet, dass** von der Dosiereinrichtung (10) zur Durchführung des Dosierprozesses unter Zuhilfenahme der Spülpumpe (16) oder der Spüleinrichtung (90) eine Förderung des Volumens entlang eines zweiten Fluidleitungsabschnittes (23a, 23b, 23c) von der Stelle (22a, 22b, 22c) stromabwärts der Schalteinrichtung (14a, 14b, 14c) bis zu dem Zielgerät (13a, 13b, 13c) veranlassbar ist.

5. Dosiereinrichtung (10) nach Anspruch 4, **dadurch gekennzeichnet, dass** die Spülpumpe (16) oder der Spüleinrichtung (90) von der Steuerung (17) zur Durchführung des Dosierprozesses ansprechbar ist.

6. Dosiereinrichtung (10) nach einem der vorangegangenen Ansprüche, **dadurch gekennzeichnet, dass** eine Länge (24) des zweiten Fluidleitungsabschnittes (23a, 23b, 23c) mehr als 5m, insbesondere mehr als 10m, beträgt und/ oder dass der zweite Fluidleitungsabschnitt (23a, 23b, 23c) eine große Höhendifferenz, von insbesondere mehr als 2 m, überbrückt.

7. Dosiereinrichtung (10) nach einem der vorangegangenen Ansprüche, **dadurch gekennzeichnet, dass** die Dosiereinrichtung (10) eingangsseitig mit wenigstens einem Behältnis (20a, 20b, 20c) verbunden ist, das mit einem Medium befüllt ist.

8. Dosiereinrichtung (10) nach einem der vorangegangenen Ansprüche, **dadurch gekennzeichnet, dass** die Dosiereinrichtung (10) eingangsseitig mit mehreren Behältnissen (20a, 20b, 20c) verbunden ist.

9. Dosiereinrichtung (10) nach Anspruch 8, **dadurch gekennzeichnet, dass** die mehreren Behältnisse (20a, 20b, 20c) mit unterschiedlichen Medien (11a, 11b) und/oder mit Spülmedium (11c) befüllt sind.

10. Dosiereinrichtung (10) nach einem der Ansprüche 1 bis 9, **dadurch gekennzeichnet, dass** die Dosierpumpe (15) und die Spülpumpe (16) unterschiedlich ausgebildet sind, und insbesondere unterschiedliche Pumpenarten und/ oder unterschiedliche Leistungsklassen umfassen.

11. Verfahren zum Dosieren und Zuführen von Medien (11a, 11b) über Fluidleitungen (12a, 12b, 12c, 34, 12e, 12f, 12g, 12l, 12m, 12n) zu wenigstens einem Zielgerät (13a, 13b, 13c), insbesondere zu einer gewerblichen textilen Waschmaschine, wobei die Dosiereinrichtung (10) mit wenigstens einem Behältnis (20a, 20b, 20c) verbunden ist, das mit einem Medium (11a, 11b) befüllt ist, wobei die Dosiereinrichtung (10) eine Steuerung (17) aufweist, mit der zur Durchführung eines Dosierprozesses eine Dosierpumpe (15) und eine Spülpumpe (16) oder eine Spüleinrichtung (90) ansprechbar ist sowie eine Schalteinrichtung (14a, 14b, 14c), die in einem ersten Schaltzustand (18) eine kommunikative Verbindung zwischen der Dosierpumpe (15) und dem Zielgerät (13a, 13b, 13c) bereitstellt und die in einem zweiten Schaltzustand (19) eine kommunikative Verbindung zwischen der Spülpumpe (16) oder der Spüleinrichtung (90) und dem Zielgerät (13a, 13b, 13c) bereitstellt, **gekennzeichnet durch** die Schritte:
a) Ansprechen der Schalteinrichtung (14a, 14b, 14c) durch die Steuerung (17), um diese in ihren ersten Schaltzustand (18) zu überführen,
b) Ansprechen der Dosierpumpe (15) durch die Steuerung (17), um eine vorherbestimmte Menge an Medium (11a, 11b) aus dem Behältnis (20a, 20b, 20c) zu entnehmen und zu einer Stelle (22a, 22b, 22c) stromabwärts der Schalteinrichtung (14a, 14b, 14c) zu fördern,
c) Ansprechen der Schalteinrichtung (14a, 14b, 14c) durch die Steuerung (17), um diese in ihren zweiten Schaltzustand (19) zu überführen,
d) Ansprechen der Spülpumpe (16) oder der Spüleinrichtung (90) durch die Steuerung (17), um die vorherbestimmte Menge an Medium (11a, 11b) von der Stelle (22a, 22b) stromabwärts der Schalteinrichtung (14a, 14b, 14c) zu dem Zielgerät (13a, 13b, 13c) zu fördern.

12. Verfahren zum Dosieren und Zuführen von Medien (11a, 11b) über Fluidleitungen (12a, 12b, 12c, 34, 12e, 12f, 12g, 12l, 12m, 12n) zu mehreren Zielgeräten (13a, 13b, 13c), insbesondere zu mehreren gewerblichen textilen Waschmaschinen, wobei die Dosiereinrichtung (10) mit mehreren Behältnissen (20a, 20b, 20c) verbunden ist, die mit unterschiedlichen Medien (11a, 11b) befüllt sind, wobei die Dosiereinrichtung (10) eine Steuerung (17) aufweist, mit der zur Durchführung eines Dosierprozesses eine Dosierpumpe (15) und eine Spülpumpe (16) oder eine Spüleinrichtung (90) sowie mehrere Schalteinrichtungen (14a, 14b, 14c) ansprechbar sind, wobei jeweils einem Zielgerät (13a, 13b, 13c) eine Schalteinrichtung (14a, 14b, 14c) zugeordnet ist, wobei eine Schalteinrichtung (14a, 14b, 14c) jeweils in einem ersten Schaltzustand (18) eine kommunikative Verbindung zwischen der Dosierpumpe (15) und dem dieser Schalteinrichtung (14a, 14b, 14c) zugeordneten Zielgerät (13a, 13b, 13c) bereitstellt und in einem zweiten Schaltzustand (19) eine kommunikative Verbindung zwischen der Spülpumpe (16) oder der Spüleinrichtung (90) und dem dieser Schalteinrichtung (14a, 14b, 14c) zugeordneten Zielgerät (13a, 13b, 13c) bereitstellt, **gekennzeichnet durch** die Schritte:
e) Ansprechen einer ersten Schalteinrichtung (14a) durch die Steuerung (17), um diese in ihren ersten Schaltzustand (18) zu überführen,
f) Ansprechen der Dosierpumpe (15) durch die Steuerung (17), um eine vorherbestimmte Menge an Medium (11a) aus dem Behältnis (20a) zu entnehmen und zu einer Stelle (22a) stromabwärts der ersten Schalteinrichtung (14a) zu fördern,
g) Ansprechen der ersten Schalteinrichtung (14a) durch die Steuerung (17), um diese in ihren zweiten Schaltzustand (19) zu überführen,
h) Ansprechen der Spülpumpe (16) oder der Spüleinrichtung (90) durch die Steuerung (17), um die vorherbestimmte Menge an Medium (11a) von der Stelle (22a) stromabwärts der ersten Schalteinrichtung (14a) zu dem Zielgerät (13a, 13b, 13c) zu fördern,
i) Ansprechen einer zweiten Schalteinrichtung (14b) durch die Steuerung (17), um diese in ihren ersten Schaltzustand (18) zu überführen,
j) Ansprechen der Dosierpumpe (15) durch die Steuerung (17), um eine vorherbestimmte Menge an Medium (11b) aus dem Behältnis (20b) zu entnehmen und zu einer Stelle (22b) stromabwärts der zweiten Schalteinrichtung (14b) zu fördern,
k) wobei der Schritt j) durchgeführt wird, bevor der Schritt h) beendet ist.

13. Dosiereinrichtung (10) zur Dosierung und Zuführung von Medien (11a, 11b) über Fluidleitungen (12a, 12b, 12c) zu wenigstens einem Zielgerät (13a, 13b, 13c), insbesondere zu einer gewerblichen textilen Waschmaschine, wobei die Dosiereinrichtung eine Schalteinrichtung (14a, 14b, 14c) aufweist, die eingangsseitig mit einer Dosierpumpe (15b), einer Verdünnungspumpe (68) und mit einer Spülpumpe (16) oder einer Spüleinrichtung (90), und die ausgangsseitig mit einem Zielgerät (13a, 13b, 13c) verbunden ist, und die von einer Steuerung (17) der Dosiereinrichtung (10) zur Änderung ihres Schaltzustandes ansprechbar ist, wobei die Schalteinrichtung (14a, 14b, 14c) in einem ersten Schaltzustand (18) eine kommunikative Verbindung zwischen der Dosierpumpe (15b), der Verdünnungspumpe (68) und dem Zielgerät (13a, 13b, 13c) bereitstellt und in einem zweiten Schaltzustand (19) eine kommunikative Verbindung zwischen der Spülpumpe (16) oder der Spüleinrichtung (90) und dem Zielgerät (13a, 13b, 13c) bereitstellt.

14. Dosiereinrichtung (10) zur Dosierung und Zuführung von Medien (11a, 11b) über Fluidleitungen (12a, 12b, 12c) zu wenigstens einem Zielgerät (13a, 13b, 13c), insbesondere zu einer gewerblichen textilen Waschmaschine, wobei die Dosiereinrichtung eine Schalteinrichtung (14a, 14b, 14c) aufweist, die eingangsseitig mit einer Dosierpumpe (15b), und mit einer Spülpumpe (16) oder einer Spüleinrichtung (90) und die ausgangsseitig mit einem Zielgerät (13a, 13b, 13c) verbunden ist, wobei die Schalteinrichtung (14a, 14b, 14c) von einer Steuerung (17) der Dosiereinrichtung (10) zur Änderung ihres Schaltzustandes ansprechbar ist, wobei die Schalteinrichtung (14a, 14b, 14c) in einem ersten Schaltzustand (18) eine kommunikative Verbindung zwischen der Dosierpumpe (15b) und/oder einem von der Spülpumpe (16) oder der Spüleinrichtung (90) beaufschlagbaren Verdünnungsbypass (70b) und dem Zielgerät (13a, 13b, 13c) bereitstellt und in einem zweiten Schaltzustand (19) eine kommunikative Verbindung zwischen der Spülpumpe (16) oder der Spüleinrichtung (90) und dem Zielgerät (13a, 13b, 13c) bereitstellt.

15. Dosiereinrichtung (10) zur Dosierung und Zuführung von Medien (11a, 11b) über Fluidleitungen (12a, 12b, 12c) zu wenigstens einem Zielgerät (13a, 13b, 13c), insbesondere zu einer gewerblichen textilen Waschmaschine, wobei die Dosiereinrichtung eine Schalteinrichtung (14d, 14e, 14f) aufweist, die eingangsseitig mit einer Dosierpumpe (15b), einem Verdünnungsbypass ( 70c, 70d, 70d) und mit einer Spülpumpe (16) oder einer Spüleinrichtung (90) und die ausgangsseitig mit einem Zielgerät verbunden ist, wobei die Schalteinrichtung (14d, 14e, 14f) von einer Steuerung (17) der Dosiereinrichtung (10) zur Änderung ihres Schaltzustandes ansprechbar ist, wobei die Schalteinrichtung (14a, 14b, 14c, 14d, 14e, 14f) in einem ersten Schaltzustand (18) eine kommunikative Verbindung zwischen der Dosierpumpe (15b), dem von der Spülpumpe (16) oder der Spüleinrichtung (90) beaufschlagbaren Verdünnungsbypass (70c, 70d, 70e) und dem Zielgerät (13a, 13b, 13c) bereitstellt und in einem zweiten Schaltzustand (19) eine kommunikative Verbindung zwischen der Spülpumpe (16) oder der Spüleinrichtung (90) und dem Zielgerät (13a, 13b, 13c) bereitstellt.
